(19) Europäisches Patentamt
European Patent Office
Office européen des brevets

(11) EP 3 845 609 A1

(12) **EUROPEAN PATENT APPLICATION**

(43) Date of publication:
**07.07.2021 Bulletin 2021/27**

(21) Application number: **20150326.5**

(22) Date of filing: **06.01.2020**

(51) Int Cl.:
***C09D 4/00*** (2006.01) ***C09D 183/04*** (2006.01)
***C09D 183/06*** (2006.01) ***C09D 183/08*** (2006.01)
***C08G 77/24*** (2006.01) ***F16L 55/162*** (2006.01)
***F16L 58/10*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **SUEZ Groupe**
**92040 Paris La Défense (FR)**

(72) Inventors:
- **Rabaud, Benjamin**
**78500 Sartrouville (FR)**
- **Experton, Juliette**
**75009 Paris (FR)**
- **Cazin, Christophe**
**95000 Cergy (FR)**
- **Giorni, Catherine**
**69720 Saint Bonnet de Mure (FR)**

(74) Representative: **August Debouzy**
**7, rue de Téhéran**
**75008 Paris (FR)**

# (54) COATING COMPRISING A SOL-GEL MATRIX FOR PIPES IN A WATER DISTRIBUTION NETWORK AND CORRESPONDING METHOD

(57) [The present invention relates to the use of sol-gel matrix to prevent or reduce the degradation of pipes of an existing water distribution network. More specifically, the invention discloses a pipe element of an existing water distribution network having:
a. a pipe body extending along a central axis, the pipe body having an internal surface and an external surface; and
b. a coating applied onto said internal surface, said coating comprising a sol-gel matrix obtained by a sol-gel processed composition.

The present invention also relates to a method for coating the internal surface of a pipe body of a pipe element of an existing water distribution network using a sol-gel matrix obtained by a sol-gel processed composition.]

EP 3 845 609 A1

## Description

### TECHNICAL FIELD OF THE INVENTION

The present invention relates to the field of water networks, preferably of drinking water networks. More specifically, the present invention relates to a pipe element of an existing water distribution network coated with a coating composition comprising a sol-gel matrix, said sol-gel matrix being obtained by a sol-gel processed composition, e.g. for the prevention of further degradation of pipes in an existing water distribution system, in particular further corrosion of pipes of an existing water distribution network. The invention also relates to a method for extending the lifetime of degraded pipes using said composition comprising a sol-gel matrix, said sol-gel matrix being obtained by a sol-gel processed composition.

### TECHNICAL BACKGROUND

A system for distributing water, such as drinking water, is notably made of pipes connecting a water treatment plant to the consumers. One of the main concern regarding water distribution network is the aging of the network and the pipes as well as its maintenance. Indeed, for instance, the major part of the water distribution network in France has been created after the 1930's and has been progressively extended after the Second World War. Consequently, various materials such as lead, cast iron, polyvinyl chloride (PVC), cement... have been used throughout time depending on the demands of the networks regarding pressure, soil nature, obstacles to be crossed etc.

However, each material has its drawback. For instance, lead can, during network degradation, cause leaching into the transported water, thus increasing its content in drinking water above normalized levels and/or generating a major risk for public health. PVC pipes may release vinyl chloride monomers, or VCM, of the formula $C_2H_3Cl$ which are carcinogenic. Cast iron pipes corrode when in contact with water and cement and concrete degrade. In addition, biofilm can develop on the internal surface of pipes and release toxins. In other words, the aging of pipes represents a public health issue.

In addition, pipes have to be buried deep enough to be protected from freezing, which complicates their access for renovation works.

Nowadays, most systems have an annual renewal rate of 0.5% or less and must thus have a service life of more than 200 years, regardless of the material and its environment. Until the end of the $20^{th}$ century, the low renewal rate was justified by the fact that most of the water distribution networks were relatively "young" considering that they were build up in the second half of the $20^{th}$ century. Indeed, the average age of water distribution pipes is estimated around 42. However, it is estimated that pipes can be used between 100 and 160 years if the operating conditions are good. For instance, the annual renewal rate (less than 0.5%) of the 1.6 million km of pipes in the United States implies their maintenance over 200 years. In 2005, the Environmental Protection Agency (EPA) considered that the renewal and maintenance of the water distribution network in the USA would cost $183 billion over 20 years. Therefore, the aging and thus the renewal and maintenance of water distribution network represent a major challenge for water supply companies and public bodies.

Improved pipes, more resistant to aging-associated problems, have also been developed. Mention may be made of pipes having an inner hydrophobic layer (or coating). An example of such hydrophobic coating is silicon-based xerogel. In particular, DE 10 2008 025 795 describes the use of a xerogel coating inside metallic pipes for flowing hot exhaust gas, so that at the operating temperature, the xerogel actually turns into a ceramic coating. US6019254 discloses the use of an inner layer for preventing minerals such as Ca, Mg, etc. from depositing on a tube, in particular a coiled tube, such as those used in the food industry for transporting thick aqueous liquids such as juices. WO2005/045144 describes the use of glass-like sol-gel materials for coating water-conducting fittings, in particular plumbing fixtures such as sanitary fixtures, kitchen fixtures, and/or bathroom fixtures, thus protecting them against metal - particularly lead, copper and nickel - from escaping into the water to be conducted. However, these documents all relate to the production of "new material", *i.e.* they propose methods that are only preventive rather than curative methods allowing to prolong the lifetime of already existing water distribution networks, including already degraded and/or corroded pipes.

Several techniques have been developed in order to maintain and reduce the occurrence of the above mentioned issues. The first technique is the replacement of aged pipes, which requires open road works. However, open road works cause important nuisance for the neighbourhood. In addition, open road works are time consuming and costly.

Another solution consists in lining the pipe. Briefly, lining consists in inserting in a pipe by air reversion a flexible sheath (in particular textile sheath) impregnated with a resin. The impregnated sheath comes in contact with the internal wall of the pipe to be rehabilitated and forms, after polymerization of the resin, a new pipe. This technique can be carried out for pipes having an internal diameter of 150-1200 mm. However, this technique cannot apply to water distribution network since no opening can be made in the sheath. Therefore, it only applies to pipes without connection. In addition, the equipment is very expensive and sophisticated. Moreover, this technique requires longer than one day to be implemented and hence, involves nuisance for the neighbourhood.

A similar technique consists in introducing in a pipe to be restored another pipe the diameter of which is either smaller or larger than the diameter of the pipe to be restored. Such technique is notably disclosed in the international patent application PCT/EP2019/051474. However, such technique involves roadworks at each branching and hence, its implementation requires more than a work day.

Another technique consists in pipe bursting, which is a trenchless method for replacing buried pipelines (such as sewer, water, or natural gas pipes) without the need for a traditional construction trench. However, as for the lining techniques, pipe bursting requires more than a day's work.

Another technique for cleaning pipes of a water distribution network is "ice pigging" and is notably disclosed in international patent application WO 2018/228887. This technique consists in injecting a semi-solid ice slurry in the pipes to be cleaned. This technique is highly efficient, cost effective, low risk and relatively quick. It allows the cleaning of pipes and is highly efficient to remove biofilm developed on the internal surface of pipes. However, this technique aims at cleaning a pipe and not preventing the formation of biofouling.

Another technique consists in projecting an epoxy or polyurethane resin inside the pipe. Such technique results in the isolation of the pipe from water and can be carried out in one day. For instance, international application WO 2011/121252 discloses pipes lined with a resin mortar and corresponding methods for lining pipes with such resin mortar. However, the equipment required for such techniques is very expensive and complex, and thus requires an important training of the operators. In addition, epoxy or polyurethane resins may also release toxic monomers.

There is thus a need for a technique allowing to extend the lifetime of pipelines in existing water distribution networks, especially for drinking water distribution network. Such technique would allow to address the specific problem of networks, which are already in place, and thus not usually easy to access, in contrast with the manufacturing of new pipes. Such technique would advantageously:

- be cost-effective and easy to implement,
- improve or at least preserves the quality of water, and
- add at least one year to the lifetime of pipes in an existing water distribution network, each time the coating is applied and/or renewed.

The purpose of the present invention is thus to overcome, at least partly, the drawbacks of the prior art.

More specifically, one of the objective of the present invention is to provide a method that is easy to implement for preventing the degradation, and more particularly the further degradation, of pipes of an existing water distribution network. As used herein, "easy to implement" means that the method of the invention is either easy to handle and/or does not require specific technical skills from the worker and/or does not require any sophisticated equipment.

The present invention has also the objective to provide a method for preventing the degradation, and more particularly the further degradation, of pipes in existing water distribution network, which does not require any roadworks or at the very least reduces the need or the importance of roadworks.

The present invention has also the objective to provide a method for preventing the degradation, and more particularly the further degradation, of pipes, which helps to reduce at least one of the cost of maintenance of drinking water distribution network, as well as monomers release from plastic coated pipes, VCM release from PVC pipes, lead leaching, carbonation of cement or concrete-based pipes, and/or further corrosion of metal pipes.

The present invention has also the objective to reduce the formation of biofilm on the internal surface of pipes, regardless of the material said pipes are made of.

The present invention has also the objective of providing such method which can also help to improve, or at the very least preserves, the quality of water, especially drinking water.

## SUMMARY OF THE INVENTION

To this end, the invention discloses a pipe element of an existing water distribution network having:

a. a pipe body extending along a central axis, the pipe body having an internal surface and an external surface; and

b. a coating applied onto said internal surface, said coating comprising a sol-gel matrix obtained by a sol-gel processed composition.

Advantageously, said sol-gel matrix is a xerogel. In a preferred embodiment, said xerogel is an inorganic xerogel. In a more preferred embodiment, said xerogel is an organically modified inorganic xerogel.

In a preferred embodiment, said pipe body is already degraded.

In a more preferred embodiment, said pipe body comprises metal and said pipe body is already corroded.

Advantageously, said sol-gel processed composition comprises at least one compound of formula (I) below:

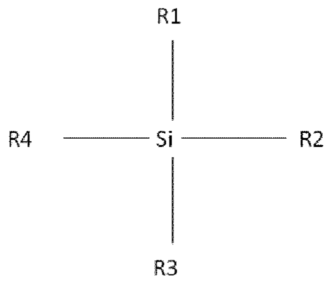

(I)

wherein

$R^1$, $R^2$, $R^3$ are independently of each other a linear or ramified $C_1$-$C_{12}$ alkyl group, a linear or ramified $C_1$-$C_{12}$ alkoxy group, or a linear or ramified O-C(O)-($C_1$-$C_{12}$ alkyl) group,

provided that at least 2 of $R^1$, $R^2$, $R^3$ are a linear or ramified $C_1$-$C_{12}$ alkoxy group or a linear or ramified O-C(O)-($C_1$-$C_{12}$ alkyl) group;

$R^4$ is:

- a linear or ramified $C_1$-$C_{12}$ alkyl group, optionally substituted by 1 to 3 substituents selected from the group consisting of: F, SH, $NR_aR_b$, $OR_a$, COOH, $COOR_c$, $CHOCH_2$,
    - with $R_a$ and $R_b$ being independent from each other H, or a linear or ramified $C_1$-$C_6$ alkyl group wherein one carbon atom may be replaced by O, S or NH,
    - and $R_c$ being a linear or ramified $C_1$-$C_6$ alkyl group or a linear or ramified $C_1$-$C_4$ alkenyl group;
- a linear or ramified $C_1$-$C_4$ alkenyl group, preferably a vinyl group;
- a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above or below;
- a linear or ramified O-C(O)-($C_1$-$C_{12}$ alkyl) group; or
- the compound of formula (I) is symmetrical, and $R^4$ is a $C_2$-$C_4$ alkylene group, wherein 1 or 2 carbon atoms may be replaced by an oxygen or sulphur atom.

In a particular embodiment, $R^1$, $R^2$, $R^3$ are identical.

In another particular embodiment, $R^1$, $R^2$, $R^3$ are independently:

- a linear or ramified $C_1$-$C_{10}$ alkyl group optionally substituted by a $OR_a$, $NR_aR_b$, or $COOR_c$, with $R_a$, $R_b$ and $R_c$ as defined above or below and preferably being H, a methyl, a vinyl or a glycidoxy group, or
- a linear or ramified $C_1$-$C_{10}$ alkoxy group.

Preferably, $R^1$, $R^2$, $R^3$ are a linear $C_1$-$C_2$ alkyl group.

Advantageously, $R^1$, $R^2$, $R^3$ are independently:

- a linear or ramified $C_1$-$C_6$, such as a $C_1$-$C_4$ alkyl group optionally substituted by a $NR_aR_b$, or $COOR_c$, with $R_a$, $R_b$ and $R_c$ as defined above or below and preferably being H, a methyl or a gliyciodoxy group, or
- a linear or ramified $C_1$-$C_4$ alkoxy group.

Preferably, $R^1$, $R^2$, $R^3$ are independently methyl, methoxy, ethyl, ethoxy, propyl, propoxy, isopropyl, isopropoxy, butyl, butoxy, isobutyl, isobutoxy, pentyl, pentoxy, octyl, dodecyl.

In another particular embodiment, $R^1$, $R^2$, $R^3$ are independently of each other a linear or ramified $C_1$-$C_{10}$ alkoxy group, such as a methoxy group, an ethoxy group, an isoproproxy group, or a decyloxy group, preferably a methoxy or an ethoxy group.

In a particular embodiment, $R^4$ is:

- a linear or ramified $C_1$-$C_{12}$ alkyl group, optionally substituted by 1 to 3 substituents selected from the group consisting of: F, SH, $NR_aR_b$, $OR_a$, COOH, $COOR_c$, $CHOCH_2$,
    - with $R_a$ and $R_b$ being independent from each other H, or a linear or ramified $C_1$-$C_6$ alkyl group wherein one carbon atom may be replaced by O, S or NH,
    - and $R_c$ being a linear or ramified $C_1$-$C_6$ alkyl group or a linear or ramified $C_1$-$C_4$ alkenyl group;
- a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above;
- a linear or ramified $C_2$-$C_4$ alkenyl group, preferably a vinyl group;
- a linear or ramified O-C(O)-($C_1$-$C_{12}$ alkyl) group, in particular a linear or ramified O-C(O)-($C_1$-$C_{12}$ alkyl) group, such as an acetoxy group; or
- the compound of formula (I) is symmetrical, and $R^4$ is a $C_2$-$C_4$ alkylene group, wherein 1 or 2 carbon atoms may be replaced by an oxygen or sulphur atom.

In a first embodiment, the compound of formula (I) is symmetrical, and $R^4$ is a $C_2$-$C_4$ alkylene group, wherein 1 or 2 carbon atoms may be replaced by a sulphur atom. Preferably, in this first embodiment, $R^4$ is a -$CH_2$- (methylene) group, or a-$CH_2$-$CH_2$-S-S- group. In a variant of this embodiment, $R^4$ can be a $C_2$-$C_4$ alkylene group, wherein 1 or 2 carbon atoms may be replaced by a sulphur atom, and compound of formula (I) has the general formula ($R^1$)($R^2$)($R^3$)Si-R4-R4-Si($_R1$)($_R2$)($R^3$), $R^1$, $R^2$, $R^3$ and $R^4$ being defined as above.

In a second embodiment, $R^4$ is a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above. Preferably, in this embodiment, $R^4$ is a linear or ramified $C_1$-$C_{12}$ alkoxy group, such as a linear or ramified $C_1$-$C_6$ alkoxy group, in particular a linear or ramified $C_1$-$C_4$ alkoxy group such as an ethoxy or a methoxy group.

In a third embodiment, $R^4$ is a linear or ramified O-C(O)-($C_1$-$C_{12}$ alkyl) group, preferably a linear or ramified O-C(O)-($C_1$-$C_6$ alkyl) group, even more preferably a linear or ramified O-C(O)-($C_1$-$C_4$ alkyl) group, such as an acetoxy group.

In a fourth embodiment, $R^4$ is a linear or ramified $C_1$-$C_{12}$ alkyl group, optionally substituted by 1 to 3 substituents selected from the group consisting of: F, SH, $NR_aR_b$, $OR_a$, COOH, $COOR_c$, with $R_a$ and $R_b$ being independent from each other H, or a linear or ramified $C_1$-$C_6$ alkyl group wherein one carbon atom may be replaced by O, S or NH, and $R_c$ being a linear or ramified $C_1$-$C_6$ alkyl group or a linear or ramified $C_1$-$C_4$ alkenyl group.

In a fifth embodiment, $R^4$ is a linear or ramified $C_1$-$C_4$ alkenyl group, such as a vinyl group.

Preferably, $R^4$ is methyl, methoxy, ethyl, ethoxy, propyl, propoxy, isopropyl, isopropoxy, butyl, isobutyl, isobutoxy, octyl, dodecyl, 3-aminoproprył, 3-glycidoxypropyl, or 3-acryloxypropyl.

Preferred compounds of formula (I) are tetraethoxysilane (TEOS), triethoxyoctylsilane (TEOOS), 3-glycidoxypropyltrimethoxysilane (GPTMS), 3-methacryloxy-propyl-trimethoxysilane (MAPTS), 3-aminopropyltriethoxysilane (APTES), tetramethoxysilane (TMOS), tetraacetoxysilane (TAOS), triethoxydodecylsilane (TEODS), methyltriethoxysilane (MTES), methyltrimethoxysilane (MTMS), butyltriethoxysilane (BTES), isobutyltrimethoxysilane (IBTMS), 3-(2-aminoethyl)aminopropyltrimethoxysilane (DAMO), 3-acryloyloxypropyltrimethoxysilane (AOPTMS), 3-mercapto-propyl-trimethoxysilane (MPTMS), and bis-[3-(triethoxysilyl)propyl]polysulfide (TESPTS), preferably TEOS, TEOOS, GPTMS, MAPTS and APTES.

In the compounds of formula (I), any combination of specific, particular, advantageous and preferred embodiments of $R^1$, $R^2$, $R^3$ and $R^4$ are encompassed by the present invention.

The sol-gel processed composition of the invention may comprise a mixture of 2 or more, preferably 2 or 3, compounds of formula (I).

The sol-gel processed composition of the invention may comprise additives.

Advantageously, said additives can be chosen amongst metallic anti-corrosion particles, surfactants and fillers.

Preferably, said additives are metallic anti-corrosion particles. More preferably, said metallic anti-corrosion

particles can be chosen amongst $TiO_2$ and $Zn_3(PO_4)_2$.

Advantageously, the sol-gel processed composition further comprises a transition metal alkoxide and/or a transition metal oxide.

Advantageously, the sol-gel matrix has a thickness of less than 100 μm, preferably comprised between 15-40 μm, more preferably between 20-30 μm and even more preferably of about 25 μm.

Advantageously, said internal surface is made of a material selected among wood, clay, plastics, metals, glasses, cement, concrete, and a combination thereof. Preferably, said internal surface is made of, comprises or consists of a material selected among plastics, metals, cements, concrete, and combinations thereof.

Advantageously, the material is a metal such as iron, copper, brass, lead, advantageously iron such as cast iron, preferably lamellar metals such as cast iron, steel or ductile iron, preferably lamellar cast iron. The metal may be coated by a lining such as a concrete lining or a polymeric lining.

The invention also discloses a method for coating a pipe element of an existing water distribution network, said pipe element having a pipe body extending along a central axis, the pipe body having an internal surface and an external surface, the method comprising a step of applying of a sol-gel process composition onto said internal surface of said pipe element, thus resulting in the formation of a coating comprising a sol-gel matrix onto the internal surface of said pipe element obtained by a sol-gel processed composition.

In other words, the invention discloses a method for coating a pipe element from an existing water distribution network, said pipe element having a pipe body extending along a central axis, the pipe body having an internal surface and an external surface, the method comprising a step of applying onto said internal surface a coating comprising a sol-gel matrix obtained by a sol-gel processed composition.

Preferably, the sol-gel processed composition is as defined above.

Advantageously, said internal surface of a pipe comprises metal and said coating reduces or prevents the corrosion of metal.

Advantageously, said internal surface of a pipe comprises lead and said coating reduces or prevents lead leaching.

Advantageously, said internal surface of a pipe comprises polyvinyl chloride and said coating reduces or prevents the release of vinyl chloride monomers (VCM).

Advantageously, said internal surface of a pipe comprises concrete, asbestos cement, cement and/or mortar coating, and said coating reduces the degradation of said concrete, asbestos cement, cement and/or mortar coating.

Advantageously, said sol-gel processed composition is defined as above.

The invention also discloses a method for preventing corrosion and/or for reducing metal ion leaching from a pipe element of an existing water distribution network, said pipe element comprising a pipe body extending along a central axis, the pipe body having an internal surface and an external surface, said internal surface comprising a metal surface, said method comprising a step of applying onto said internal surface a coating comprising a sol-gel matrix obtained by a sol-gel processed composition.

Preferably, the sol-gel processed composition is as defined above.

Preferably, the method according to this embodiment can prevent the further corrosion of said pipe element.

In a preferred embodiment of this aspect of the invention, the method allows to prevent the leaching and/or for reducing lead ion leaching from a pipe element of an existing water distribution network, said pipe element comprising a pipe body extending along a central axis, the pipe body having an internal surface and an external surface, said internal surface comprising a lead surface, said method comprising a step of applying onto said internal surface a coating comprising a sol-gel matrix obtained by a sol-gel processed composition.

Preferably, the sol-gel processed composition is as defined above.

Preferably, the method according to this embodiment can prevent the further leaching of said pipe element.

Advantageously, the invention also discloses a method a for preventing or reducing release of vinyl chloride monomers (VCM) from a pipe of an existing water distribution network, said pipe element comprising a pipe body extending along a central axis, the pipe body having an internal surface and an external surface, said internal surface comprising polyvinyl chloride, said method comprising a step of applying onto said internal surface a coating comprising a sol-gel matrix obtained by a sol-gel processed composition.

Preferably, the sol-gel processed composition is as defined above.

Preferably, the method according to this embodiment can prevent the further release of VCM of said pipe element.

Advantageously, the invention also discloses a method for preventing or reducing the degradation from a pipe element of an existing water distribution network, said pipe element having a pipe body extending along a central axis, the pipe body having an internal surface and an external surface, said internal surface comprising concrete, asbestos cement, cement and/or mortar coating, said method comprising a step of applying onto said internal surface a coating comprising a sol-gel matrix obtained by a sol-gel processed composition.

Preferably, the sol-gel processed composition is as defined above.

Preferably, the method according to this embodiment can prevent the further degradation of said pipe element.

**DETAILED DESCRIPTION OF THE INVENTION**

The disadvantages of the prior art are partly or entirely overcome by the invention which discloses a pipe element from an existing water distribution network having:

a. a pipe body extending along a central axis, the pipe body having an internal surface and an external surface; and

b. a coating applied onto said internal surface, said coating comprising a sol-gel matrix obtained by a sol-gel processed composition.

The invention applies to both new pipes and pipes already in use. However, the invention is particularly interesting for the prevention of further degradation of pipe bodies that are already in use. Indeed, the advantage of the invention is that it can be applied on existing pipes of water distribution networks and not only to new clean pipes, contrarily to the techniques of the prior art. Advantageously, the pipe body has been used in the existing water distribution network for a duration comprised between 1 year and 200 years, preferably between 30 years and 100 years.

Preferably, said pipe body is already corroded or already degraded. A corroded pipe of an existing water distribution network to which a coating according to the invention may be applied is shown at Fig. 9.

The invention thus relates to the use of a coating comprising a sol-gel matrix to coat at least part of the internal surface of a pipe element for water distribution network having a pipe body in order on the one hand to protect said internal surface from degradation as well as the development of biofilm and algae, and on the other hand to improve, or at the very least, preserve the quality of water by reducing and/or preventing the release of chemicals and/or particles into water.

As used herein, the term degradation encompasses all kinds of alteration of the material from which pipe elements are made of. Preferably, degradation encompasses corrosion, ion leaching, chemical release, carbonation, development of microorganisms or algae, oxidation, chemical reactions, disaggregation, mechanical resistance loss, putrefaction, chemical adsorption and dust deposition.

As used herein, a "sol-gel processed composition" is a starting composition comprising the required precursors and solvent for the formation of the sol-gel matrix, said starting composition being subjected to a sol-gel process in order to obtain a sol-gel matrix according to the invention.

In a preferred embodiment of the invention, the sol-gel matrix is a xerogel. Preferably, the xerogel is an inorganic xerogel. More specifically, the starting composition comprises inorganic precursors as well as hydrophobic organic chains. The resulting sol-gel matrix is thus an inorganic gel comprising organic chains. In other words, the xerogel for the implementation of the invention is preferably an organically modified inorganic xerogel, more preferably an organically modified silica xerogel. Such matrix can be designated as ORMASIL for ORganically MOdified Silica. Such xerogels are well known in the art and are disclosed in US patent application US 2012/0312192.

As used herein, a xerogel is a specific type of gel. A gel has a continuous three-dimensional structure. Gels are distinguished according to the nature of the fluid present in its 3D-structure:

- if the fluid is air, then the gel is either an aerogel or a xerogel,
- if the fluid is water, the gel is a hydrogel,
- if the fluid is organic solvent, the gel is an organogel: in the case of an alcoholic solvent, the organogel is an alcogel.

All of the terms hydrogel, alcogel and organogel are included under the more general designation of lyogels. Aerogels and xerogels are generally obtains by drying a lyogel. If the lyogel is dried under supercritical conditions, this results in an aerogel. On the opposite, the term "xerogel" refers to a gel dried under subcritical conditions, i.e. the solvent is not in the supercritical fluid state under these conditions.

Method of preparation

Sol-gel matrix according to the invention can be prepared according to any conventional method.

Traditionally, the preparation of a xerogel involves a sol-gel transition step, i.e. the passage from a suspension of solid particles in a solvent (sol) to a gelatinous material with a three-dimensional structure of a solid-appearing network: the gel. Sol-gel matrix such as xerogels are thus generally obtained using manufacturing processes comprising the following steps:

1) formation of a sol, notably by hydrolysis and condensation of precursors in a solvent.

2) gelification, followed by or comprising an aging step, leading to the formation of a lyogel;

3) drying of the lyogel (subcritical or supercritical drying), resulting in a sol-gel matrix such as an aerogel or a xerogel.

According to the invention, the first step is the formation of a precursor solution, notably by mixing precursors in a solvent. The precursor solution is prepared at room temperature by adding precursors to an organic solution. Precursors are chemical entities which initiate the chemical reaction. According to the invention, the precursors are compounds of formula (I) as disclosed in the following description. Within the context of the invention, a precursor solution is prepared by mixing one or more precursor(s) at a concentration varying between 1% and 80% by weight, preferably 20% to 60% by weight, relative to the weight of the precursors solution, in an organic solvent. Suitable organic solvents can be an alcohol of formula R-OH, with R representing a substituted or unsubstituted, straight or branched, saturated or unsaturated hydrocarbon chain, and preferably a $C_1$-$C_6$ alkyl. Non-limiting examples of alcoholic solvents (alcohols) include methanol, ethanol, isopropanol or mixtures thereof. Suitable organic solvents can also be a ketone of general formula R'C(=O)R", where R' and R" can be independently of each other a substituted or unsubstituted, straight or branched, saturated or unsaturated, cyclic or linear hydrocarbon chain. Preferably, the ketone is acetone. More preferably, the solvent is acetone, ethanol or isopropanol, more preferably isopropanol.

The next step is the formation of a sol. More specifically, a sol can be defined as a stable dispersion of colloidal particles in a liquid. The sol is synthetized at room temperature by adding water to a precursor solution. This is the hydrolysis step. Acidic or basic water is introduced dropwise to hydrolyse the precursor(s) and form a stable silicon-based polymer suspension (sol), in order to avoid the formation of two separate phases (organic and gel). The optimization of the proportion of each components of the sol-gel composition - mainly precursors, solvent, water, base or acid, pH of the solution - must be made for each specific combination and can be done by routine assays without undue burden. Preferably, the hydrolysis step is performed by the addition of acid. Suitable acids for the implementation of the hydrolysis step can be chosen amongst hydrochloric acid, sulfuric acid, acetic acid, formic acid, nitric acid, perchloric acid, phosphoric acid, boric acid, preferably hydrochloric acid. The pH of the solution can be lower than 7, preferably lower than 5 and more preferably between 1 and 4.

The solution of hydrolysed precursors is then vigorously mixed for a period of about 12-24h until a gel is formed. This gel is in the liquid state.

The gel thus obtained can be used to coat a substrate. The thickness of the gel coating, e, depends on the viscosity of the sol, $\eta$; the substrate withdrawal speed, $v$; the liquid/air surface tension, $\gamma$, and the gravitational constant, *g,* according to the formula (II):

$$e = \frac{0{,}94\,(\eta v)^{2/3}}{\gamma^{1/6}\,(\gamma g)^{1/2}} \quad \text{(II)}$$

The last step is the drying of the gel at a temperature comprised between 10°C and 200°C, preferably between 15°C and 25°C. The drying of the sol-gel processed composition results in the formation of the coating comprising a sol-gel matrix.

In an embodiment of the invention, the sol-gel matrix has a thickness of less than 100 $\mu$m, preferably comprised between 15-40 $\mu$m, more preferably between 20-30 $\mu$m and even more preferably of 25 $\mu$m. Preferably, the thickness of the sol-gel matrix extends along the entire length of the pipe.

The sol-gel matrix has a glass-like structure, that is to say that the sol-gel matrix is chemically inert and does not react with its environment. In particular, it does not release any chemical into water once the coating is applied and dried.

Suitable sol-gel matrix for the implementation of the invention can be of the following type as shown on Fig.1.

Preferably, in particular for drinking water pipes, the components of the sol-gel composition are compatible with drinking water use. Hydrolysis and condensation reactions continue during the aging step, which increases the connectivity of the gel structure. Aging of the gel is reflected by physicochemical changes which occur after gelification, which can be distinguished as follows:

- polymerization that is a reinforcement step via the formation of new bonds, or crosslinking, notably by condensation, for example, due to Brownian motion and the flexibility of the network;

- curing that is the process of dissolution and reprecipitation, which is basically observed in the case of an inorganic

lyogel; and

- phase transformation or syneresis due to shrinkage of the material with expulsion of the solvent.

The present invention thus relates to a coating composition comprising a sol-gel matrix to be coated on the internal surface of pipes of an existing water distribution network. Preferably, said water distribution network is a drinking water distribution network. Indeed, according to the invention, the coating of a pipe element by a coating comprising a sol-gel matrix helps to protect the pipe from corrosion and/or degradation as well as the formation of biofilms. Corrosion is the gradual destruction of materials by chemical and/or electrochemical reaction with their environment. Corrosion results in the loss or reduction of the material properties such as strength, permeability, appearance etc. More specifically, the coating of pipes of an existing water distribution network allows to extend the lifetime of said pipes, reduces the costs of maintenance of the water distribution networks and avoid the use of lengthy and expensive work roads. In addition, the sol-gel matrix helps maintain the quality of water by preventing the release of ions and chemicals in the water.

More specifically, the present invention helps to reduce at least one of the following:

- the corrosion of pipes made of metal (in particular cast iron, ductile iron, steel, copper), preferably cast iron;
- the release of VCM from pipes made of PVC;
- the release of lead from pipes containing lead;
- the formation of biofilm on the internal surface of pipes;
- the degradation of cement material-based pipes (concrete, asbestos cement, clay, cement and/or mortar coating...).

Accordingly, the present invention helps to improve the quality of water, especially drinking water. Indeed, according to the present invention, a sol-gel composition is coated on a pipe element of a water distribution network by any conventional method such as dipping, spraying, brushing and rolling as disclosed in international patent application WO 2017/100629. Said sol-gel composition then coats the internal surface of the pipe element. The sol-gel composition according to the invention can be applied as a single coat, a double coat or a triple coat. As it dries, the solvent evaporates from the sol-gel composition resulting in a sol-gel matrix. The sol-gel matrix forms a closed-porous solid coating. As used herein, the expression "closed porous" means that the sol-gel matrix has an internal porous structure. However, said porous structure is not accessible to external agents such as water, chemicals, microorganisms, algae etc. According to the invention, the sol-gel matrix creates covalent bonds with the internal surface of the pipes. In other words, the coating comprising the sol-gel matrix according to the invention forms a waterproof physical barrier between the pipe and the water flowing within the pipe. Therefore, the invention discloses a mean for protecting both the pipes of an existing water distribution network from the physico-chemical aggressions of water, and the water from the release of potentially toxic degradation products from the pipes. In addition, the formation of covalent bonds between the sol-gel matrix and the internal surface of the pipe element may provide a better adhesion to the pipes than paints or epoxy resins used in the prior art. The glass-like structure of the sol-gel matrix of the invention also ensures that the coating comprising a sol-gel matrix according to the invention does not react with water and hence, preserves its quality.

Pipes of the invention thereby eliminate or at the very least reduce the risk of contamination of the water flowing in the corroded and/or degraded pipe while increasing its activity and lifetime. In addition, the components of the sol-gel matrix are environmentally benign thus reducing the risk for the environment and the drinking water quality.

Accordingly, the present invention discloses a way for increasing the lifetime of pipes of an existing water distribution network while at the same time preserving water quality and public health.

The present invention also has many advantages over the prior art such as:

- the implementation of the invention does not require trenching as the coating can be injected in the pipes, which reduces the noise nuisance for the neighborhood;
- the invention can be carried out within one day, which limits the nuisance for the neighborhood;
- the invention does not require any expensive or sophisticated material, which would require highly qualified operators. The invention helps thus reducing the costs of operation and maintenance for the communities;
- drinking water quality is improved, or at the very least preserved, which reduces the risk for public health;

- the invention does not block the connections, which avoids roadworks at the connections between the pipe and the connections or the use of a sophisticated robot;

- the organically modified inorganic sol-gel matrix ensures that the coating is chemically inert, does not react with water and does not leach any harmful compound into water. Therefore, the water quality is improved or at least, maintained.

All in all, the invention discloses a simple method, cost efficient and easy to carry out for increasing the lifetime of pipes of an existing water distribution network and preserving the water quality at the same time. The invention also overcomes partly or entirely the disadvantages of the technologies of the prior art.

As used herein, the expressions "selected between" or "comprises between" should be read as including the specified limits of the range.

As used herein, the expression "comprises about" should be read as including values of ± 10% around the specified values, preferably of ± 5%. As used herein, the expression "lower than 7" means that the value can be 7 or any value lower than 7.

As used herein, the proportion by weight of a compound is calculated as follows: Compound %w = (weight of compound / total weight of the composition)* 100.

Sol-gel processed composition

The sol-gel processed composition can comprise at least one compound of formula (I) below:

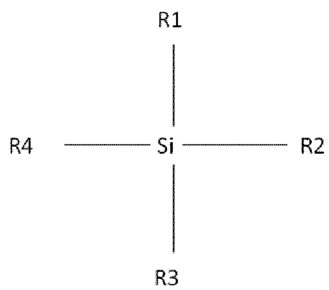

(I)

wherein

$R^1$, $R^2$, $R^3$ are independently of each other a linear or ramified $C_1$-$C_{12}$ alkyl group, a linear or ramified $C_1$-$C_{12}$ alkoxy group, or a linear or ramified O-C(O)-($C_1$-$C_{12}$ alkyl) group, provided that at least 2 of $R^1$, $R^2$, $R^3$ are a linear or ramified $C_1$-$C_{12}$ alkoxy group or a linear or ramified O-C(O)-($C_1$-$C_{12}$ alkyl) group;

$R^4$ is:

- a linear or ramified $C_1$-$C_{12}$ alkyl group, optionally substituted by 1 to 3 substituents selected from the group consisting of: F, SH, $NR_aR_b$, $OR_a$, COOH, $COOR_c$, CHOCH2,
    - with $R_a$ and $R_b$ being independent from each other H, or a linear or ramified $C_1$-$C_6$ alkyl group wherein one carbon atom may be replaced by O, S or NH,
    - and $R_c$ being a linear or ramified $C_1$-$C_6$ alkyl group or a linear or ramified $C_1$-$C_4$ alkenyl group;

- a linear or ramified $C_1$-$C_4$ alkenyl group, preferably a vinyl group;

- a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above or below;

- a linear or ramified O-C(O)-($C_1$-$C_{12}$ alkyl) group; or

- the compound of formula (I) is symmetrical, and $R^4$ is a $C_2$-$C_4$ alkylene group, wherein 1 or 2 carbon atoms may be replaced by an oxygen or sulphur atom.

Within the context of the invention, "symmetrical" means that the compound has a symmetrical axis or a symmetrical centre.

As a preliminary remark, the expression "($C_1$-$C_6$) alkyl" refers to a straight or branched monovalent saturated hydrocarbon chain containing from 1 to 6 carbon atoms. For instance, ($C_1$-$C_6$) alkyl groups include, but are not limited to, methyl, ethyl, n-propyl, iso-propyl, n-butyl, iso-butyl, sec-butyl, t-butyl, n-pentyl, n-hexyl, and the like.

As used herein, an "amino group" consists of a nitrogen atom attached by single bonds to hydrogen atoms, alkyl groups, aryl groups, or a combination thereof. As used herein, the term "aryl" refers to an aromatic group comprising preferably 5 to 10 carbon atoms and comprising one or more fused rings, such as, for example, a phenyl or naphtyl group. Advantageously, it will be a phenyl or a toluyl group.

As used herein, an "alkenyl" group refers to is a hydrocarbon group formed when a hydrogen atom is removed from an alkene group. An "alkene" is an unsaturated, aliphatic hydrocarbon with one or more carbon-carbon double bonds. The general formula for an alkene is $C_nH2_n$ where n is the number of carbon atoms in the molecule.

As used herein, an "alkylene" group is an organic radical formed from an unsaturated aliphatic hydrocarbon; for example, the ethylene radical $C_2H_3$-.

As used herein, an "epoxide" group of formula -$CHOCH_2$- is a cyclic ether with a three-atom ring, an oxygen atom being connected to the atoms of carbon.

In a particular embodiment, $R^1$, $R^2$, $R^3$ are identical. Preferably, $R^1$, $R^2$, $R^3$ are linear $C_1$-$C_4$ alkoxy group. Examples of compounds of formula (I) according to this embodiment are AOPTMS, APTES, APTMS, BTES, BTSE, DAMO, DETA, DMAP, IBTES, IPTMS, MAPTS, MPTMS, MTMS, PMMS, TAOS, TDF, TMSPDT, TMOS, VES, VMS as referred to in Table 1.

In another particular embodiment, $R^1$, $R^2$, $R^3$ are independently:

- a linear or ramified $C_1$-$C_{10}$ alkyl group optionally substituted by a $OR_a$, $NR_aR_b$, or $COOR_c$, with $R_a$, $R_b$ and $R_c$ as defined above or below and preferably being H, a methyl, a vinyl or a glycidoxy group, or
- a linear or ramified $C_1$-$C_{10}$ alkoxy group.

Preferably, $R^1$, $R^2$, $R^3$ are a linear $C_1$-$C_2$ alkyl group.

Advantageously, $R^1$, $R^2$, $R^3$ are independently:

- a linear or ramified $C_1$-$C_6$, such as a $C_1$-$C_4$ alkyl group optionally substituted by a $NR_aR_b$, or $COOR_c$, with $R_a$, $R_b$ and $R_c$ as defined above or below and preferably being H, a methyl or a gliycidoxy group, or
- a linear or ramified $C_1$-$C_4$ alkoxy group.

Preferred compounds according to this embodiment are GMDES and GPTMS.

Preferably, $R^1$, $R^2$, $R^3$ are independently methyl, methoxy, ethyl, ethoxy, propyl, propoxy, isopropyl, isopropoxy, butyl, butoxy, isobutyl, isobutoxy, pentyl, pentoxy, octyl, dodecyl.

In another particular embodiment, $R^1$, $R^2$, $R^3$ are independently of each other a linear or ramified $C_1$-$C_{10}$ alkoxy group, such as a methoxy group, an ethoxy group, an isoproproxy group, or a decyloxy group, preferably a methoxy or an ethoxy group.

In a particular embodiment, $R^4$ is:

- a linear or ramified $C_1$-$C_{12}$ alkyl group, optionally substituted by 1 to 3 substituents selected from the group consisting of: F, SH, $OR_a$, $NR_aR_b$, or $COOR_c$, $CHOCH_2$,
    - with $R_a$, $R_b$ being independent from each other H, or a linear or ramified $C_1$-$C_6$ alkyl group wherein one carbon atom may be replaced by O, S or NH,
    - and $R_c$ being a linear or ramified $C_1$-$C_6$ alkyl group or a linear or ramified $C_1$-$C_4$ alkenyl group;
- a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above;
- a linear or ramified $C_2$-$C_4$ alkenyl group, preferably a vinyl group;
- a linear or ramified O-C(O)-($C_1$-$C_{12}$ alkyl) group, in particular a linear or ramified O-C(O)-($C_1$-$C_{12}$ alkyl) group, such as an acetoxy group; or

- the compound of formula (I) is symmetrical, and $R^4$ is a $C_2$-$C_4$ alkylene group, wherein 1 or 2 carbon atoms may be replaced by an oxygen or sulphur atom.

In a first embodiment, the compound of formula (I) is symmetrical, and $R^4$ is a $C_2$-$C_4$ alkylene group, wherein 1 or 2 carbon atoms may be replaced by a sulphur atom. Preferably, in this first embodiment, $R^4$ is a $-CH_2-$ (methylene) group, or a-$CH_2$-$CH_2$-S- group, or a $-(CH_2)_3$-S-S- group. In this embodiment, $R^4$ can be a $-CH_2-$(methylene) group, or a $-CH_2$-$CH_2$-S- group, or a $-(CH_2)_3$-S-S-, wherein 1 or 2 carbon atoms may be replaced by a sulphur or an oxygen atom, and compound of formula (I) has the general formula $(R^1)(R^2)(R^3)$Si-R4-R4-Si$(R^1)(R^2)(R^3)$, $R^1$, $R^2$, $R^3$ and $R^4$ being defined as above. Examples of symmetrical compounds according to formula (I), provided for illustrative purposes and in a non-limitative way, are BTSE and TESPTS.

In a second embodiment, $R^4$ is a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$, $R_b$ and $R_c$ as defined above. Preferably, in this embodiment, $R^4$ is a linear or ramified $C_1$-$C_{12}$ alkoxy group, such as a linear or ramified $C_1$-$C_6$ alkoxy group, in particular a linear or ramified $C_1$-$C_4$ alkoxy group such as an ethoxy or a methoxy group.

In a third embodiment, $R^4$ is a linear or ramified O-C(O)-($C_1$-$C_{12}$ alkyl) group, preferably a linear or ramified O-C(O)-($C_1$-$C_6$ alkyl) group, even more preferably a linear or ramified O-C(O)-($C_1$-$C_4$ alkyl) group, such as an acetoxy group.

In a fourth embodiment, $R^4$ is a linear or ramified $C_1$-$C_{12}$ alkyl group, optionally substituted by 1 to 3 substituents selected from the group consisting of: F, SH, $NR_aR_b$, $OR_a$, COOH, $COOR_c$, with $R_a$ and $R_b$ being independent from each other H, or a linear or ramified $C_1$-$C_6$ alkyl group wherein one carbon atom may be replaced by O, S or NH, and $R_c$ being a linear or ramified $C_1$-$C_6$ alkyl group or a linear or ramified $C_1$-$C_4$ alkenyl group.

In a preferred variant of this embodiment $R^4$ is a linear or ramified $C_1$-$C_{12}$ alkyl group substituted by a linear or ramified O-C(O)-($C_1$-$C_{12}$ alkyl) group, preferably a linear or ramified O-C(O)-($C_1$-$C_6$ alkyl) group, even more preferably a linear or ramified O-C(O)-($C_1$-$C_4$ alkyl) group, such as an acetoxy group.

In another preferred variant of this embodiment, $R^4$ is a linear or ramified $C_1$-$C_{12}$ alkyl group, substituted by $NR_aR_b$, wherein $R_a$ and $R_b$ can be independently from each other H or a linear or ramified $C_1$-$C_6$ alkyl group, preferably a $C_1$-$C_4$alkyl group, optionally substituted by an amino group $NH_2$.

In another preferred variation of this embodiment, $R^4$ is a linear or ramified $C_1$-$C_{12}$ alkyl group substituted by -SH.

In another preferred variation of this embodiment, $R^4$ is a linear or ramified $C_1$-$C_8$ alkyl group substituted by 1 to 15 atoms of F, preferably 12 atoms of F.

In a preferred variant of this embodiment, $R^4$ is a linear or ramified $C_1$-$C_{12}$ alkyl group, preferably a $C_1$-$C_3$ alkyl group substituted by an $NR_aR_b$ group, wherein $R_a$ and $R_b$ can be independently from each other H or a linear $C_1$-$C_6$ alkyl group wherein one carbon atom may be replaced by NH.

Preferably, $R^4$ is methyl, methoxy, ethyl, ethoxy, propyl, propoxy, isopropyl, isopropoxy, butyl, isobutyl, isobutoxy, octyl dodecyl, 3-aminoprapryl, 3-glycidoxypropyl, or 3-acryloxypropyl.

In a fifth embodiment, $R^4$ is a linear or ramified $C_2$-$C_4$ alkenyl group, preferably a vinyl group. Preferably, in this embodiment, $R^4$ is a vinyl group and $R^1$, $R^2$ and $R^3$ can be identical or $C_1$-$C_4$ alkoxy groups. Examples of this embodiment are VES and VMS.

Preferred compounds of formula (I) are wherein compounds of formula (I) are TEOS, TEOOS, GPTMS, MAPTS, APTES, TMOS, TAOS, TEODS, MTES, MTMS, BTES, IBTMS, DAMO, AOPTMS, MPTMS and TESPTS, preferably TEOS, TEOOS, GPTMS, MAPTS and APTES. More specifically, preferred compounds of formula (I) are listed in table 1 below:

[Table 1]

| Abbreviations | Full Names | CAS Numbers |
|---|---|---|
| AOPTMS | 3-acryloyloxypropyltrimethoxysilane | 4369-14-6 |
| APMDES | 3-aminopropyl-methyl-diethoxysilane | 3179-76-8 |
| APTES | 3-aminopropyltriethoxysilane | 919-30-2 |
| APTMS | 3-aminopropyltrimethoxysilane | 13822-56-5 |
| BTES | butyltriethoxysilane | 4781-99-1 |
| BTSE | 1,2-bis(triethoxysilyl)ethane | 16068-37-4 |
| DAMO | 3-(2-aminoethyl)aminopropyltrimethoxysilane | 1760-24-3 |
| DETA | 3-(trimethoxysilyl)propyldiethylenetriamine | 35141-30-1 |
| DMAP | dimethylaminopropyltrimethoxysilane | 2530-86-1 |

(continued)

| Abbreviations | Full Names | CAS Numbers |
|---|---|---|
| DMDES | dimethyldiethoxysilane | 78-62-6 |
| GMDES | 3-glycidoxypropylmethyldiethoxysilane | 2897-60-1 |
| GPTMS | 3-glycidoxypropyltrimethoxysilane | 2530-83-8 |
| IBTES | isobutyltriethoxysilane | 17980-47-1 |
| IBTMS | isobutyltrimethoxysilane | 18395-30-7 |
| IPTMS | isopropyltrimethoxysilane | 14346-37-3 |
| MAPTS | 3-methacryloxy-propyl-trimethoxysilane | 2530-85-0 |
| MPTMS | 3-mercapto-propyl-trimethoxysilane | 4420-74-0 |
| MTES | methyltriethoxysilane | 2031-67-6 |
| MTMS | methyltrimethoxysilane | 1185-55-3 |
| PTMS | propyltrimethoxysilane | 1067-25-0 |
| TAOS | tetraacetoxysilane | 562-90-3 |
| TDF | tridecafluorooctyltriethoxysilane | 51851-37-7 |
| TEODS | triethoxydodecylsilane | 18536-91-9 |
| TEOOS | triethoxyoctylsilane | 2943-75-1 |
| TEOS | tetraethyl orthosilicate or tetraethoxysilane | 78-10-4 |
| TESPTS | bis-[3-(triethoxysilyl)propyl]polysulfide | 40372-72-3 |
| TFP | 3,3,3-trifluoropropyltrimethoxysilane | 429-60-7 |
| TMOS | tetramethyl orthosilicate ou tetramethoxysilane | 681-84-5 |
| TMSPDT | 3-(trimethoxysilyl)propyldiethylenetriamine | 35141-30-1 |
| VES | vinyltriethoxysilane | 78-08-0 |
| VMS | vinyltrimethoxysilane | 2768-02-7 |

In the compounds of formula (I), any combination of specific, particular, advantageous and preferred embodiments of $R^1$, $R^2$, $R^3$ and $R^4$ are encompassed by the present invention.

The sol-gel processed composition of the invention may comprise a mixture of 2 or more, namely 2 or 3 compounds of formula (I). Preferably, the sol-gel processed composition comprises a mixture of TEOOS and GPTMS and/or TEOS. In a more preferred embodiment, the sol-gel processed composition comprises a mixture of TEOOS, GPTMS and TEOS.

Preferred embodiments of the sol-gel compositions of the invention can be chosen amongst:

- a sol-gel composition comprising TEOOS and GPTMS;
- a sol-gel composition comprising TEOOS and TEOS;
- a sol-gel composition comprising TEOOS;
- a sol-gel composition comprising TEOOS, GPTMS, and $TiO_2$; and
- a sol-gel composition comprising TEOOS, GPTMS, and $Zn_3(PO_4)_2$.

The sol-gel processed composition can further comprise a transition metal alkoxide and/or a transition metal oxide. As used herein, unless otherwise indicated, the term "transition metal" refers to an element whose atom has a partially filled d sub shell, or which can give rise to cations with an incomplete d sub-shell (elements in the d block of the periodic table). Examples of transition metals include elements from groups 3 to 11 on the periodic table, where the term

group refers to a column on the periodic table. For example, a transition metal is titanium, vanadium, molybdenum, tungsten, or any other element from the d block on the period table. As used herein, unless otherwise indicated, the term "transition metal alkoxide" refers to M(OR)n, where M is a transition metal as defined herein, where OR is an alkoxy group as defined herein, and where n is an integer between 1 and 5, including all integer numbers there between.

Preferably, the sol-gel composition comprises Si.

Additives

Advantageously, the sol-gel matrix composition can further comprise additives. Additives can be chosen amongst metallic anti-corrosion particles, surfactants and fillers.

The sol-gel matrix composition can further comprise metallic anticorrosion particles in order to improve the protection of corroded pipes coated with a xerogel according to the invention. Metallic anticorrosion particles can be for instance metallic oxides particles. As used herein, the term "metal" refers to the elements chosen amongst Li, Be, Na, Mg, Al, k, Ca, Sc, Ti, V, Cr, Mn,Fe, Co, Ni, Cu, Zn, Ga, Rb, Sr, Y, Zr, Nb, Mo, Tc, Ru, Rh, Pd, Ag, Cd, In, Sn, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, Fr, Ra, Ac, Th, Pa, u, Np, Pu, Am, Cm, Bk, Cf, Es, fm, Md, No, Lr, Rf, Db, Sg, Bh, Hs, Cn.

Suitable metallic anticorrosion particles should be harmless in the event they would be released in the drinking water. Preferably, metallic anti-corrosion particles are chosen amongst $Zn_3(PO_4)_2$ and $TiO_2$, more preferably $Zn_3(PO_4)_2$. Sol-gel matrix compositions including metallic anticorrosion particles are more effective to protect the existing pipe from further corrosion and participate to extend their lifetime.

Advantageously, the sol-gel matrix composition subjected to the sol-gel process comprises a surfactant. A surfactant is an amphiphilic substance which lowers the surface tension or interfacial tension of a liquid. Surfactants such as detergents, wetting agents, emulsifiers, foaming agents and dispersants are well known in the art. An amphiphilic substance is a compound, which has both hydrophilic and lipophilic properties. For instance, surfactants may have a lipophilic part such as a hydrocarbon chain, and hydrophilic part. According to the electrochemical properties of the hydrophilic part, surfactant is classified as cationic, anionic, zwitterionic or amphoteric, that is to say that the surfactant has both cationic and anionic moieties attached to the same molecule, or non-ionic. Preferably, the surfactant comprised in the sol-gel matrix composition does not release any harmful compound in the transported water and is thus harmless for the environment. For instance, conventional surfactants synthetized by living cells such as microorganisms or by plants are suitable for the implementation of the invention.

Advantageously, the sol-gel matrix composition subjected to the sol-gel process comprises a filler such as colloidal silica.

Use

In an embodiment of the invention, said internal surface is made of a material selected among wood, clay, plastics, metals, glasses, concrete, asbestos cement, cement, mortar coating, and a combination thereof. Preferably, said internal surface is made of, comprises or consists of a material selected among plastics, metals, concrete, asbestos cement, cement, mortar coating, and combinations thereof. Indeed, according to the present invention, the sol-gel matrix coating the internal surface of the pipe can bind covalently to a wide range of materials. Therefore, and thanks to the use of a coating comprising sol-gel matrix, the pipe is physically isolated from the water which (i) reduces the need to replace existing pipe, and (ii) reduces the risk of releasing chemical compounds in the water, hence improving the water quality.

In an embodiment of the invention, the material is a metal such as iron, copper, brass, lead, advantageously iron such as cast iron, preferably lamellar metals such as cast iron, steel or ductile iron, preferably lamellar cast iron. The metal may be coated by a lining such as a concrete lining or a polymeric lining.

The invention also discloses a method for coating a pipe element of an existing water distribution network,
said pipe element having a pipe body extending along a central axis, the pipe body having an internal surface and an external surface,
the method comprising a step of applying of a sol-gel process composition onto said internal surface of said pipe element, thus resulting in the formation of a coating comprising a sol-gel matrix onto the internal surface of said pipe element obtained by a sol-gel processed composition.

Preferably, said sol-gel composition is as defined above.

The invention also discloses a method for preventing the corrosion and/or for reducing metal ion leaching from a pipe of an existing water distribution network,
said pipe element comprising a pipe body extending along a central axis, the pipe body having an internal surface and an external surface, said internal surface comprising a metal surface,
said method comprising a step of applying onto said internal surface a coating comprising a sol-gel matrix obtained by

a sol-gel processed composition.

Preferably, said sol-gel composition is as defined above.

The invention also discloses a method a for preventing or reducing release of vinyl chloride monomers (VCM) from a pipe of an existing water distribution network, said pipe element comprising a pipe body extending along a central axis, the pipe body having an internal surface and an external surface, said internal surface comprising polyvinyl chloride, said method comprising a step of applying onto said internal surface a coating comprising a sol-gel matrix obtained by a sol-gel processed composition.

Preferably, said sol-gel composition is as defined above.

Advantageously, the invention also discloses a method for preventing or reducing the degradation from a pipe element of an existing water distribution network,

said pipe element having a pipe body extending along a central axis, the pipe body having an internal surface and an external surface, said internal surface comprising said internal surface comprising concrete, asbestos cement, cement and/or mortar coating,

said method comprising a step of applying onto said internal surface a coating comprising a sol-gel matrix obtained by a sol-gel processed composition.

Preferably, said sol-gel composition is as defined above.

Indeed, it has been shown by the inventors that the use of a coating, especially a sol-gel matrix as disclosed herein, onto the internal surface of pipes of a water network is very effective in preventing and reducing corrosion and the release of harmful elements.

The sol-gel processed composition can be applied by any conventional means as disclosed for instance in international application WO 2011/121252.

The invention thus provides methods for coating pipe elements in place or in situ. Otherwise stated, the methods according to the invention can be applied to pipes elements, whether they are new or already degraded and/or corroded, when they are already installed in an existing water distribution network. Therefore, contrarily to the techniques of the prior art which only apply to new and clean material, the methods of the invention can be applied to used pipes, in place. Therefore, the methods according to the invention can extend the lifetime of pipes in use while preserving the water quality.

The sol-gel processed composition can be dried in ambient air for a duration comprised between 0,5 hour and 72 hours, preferably between 0,5 hour and 8 hours. The drying of the sol-gel processed composition results in the formation of the coating comprising a sol-gel matrix. The method of the invention can thus be carried out within a day, which reduces the nuisance for the neighbourhood.

In an embodiment of the invention, the drying of the coating can be made at a temperature comprised between 10-200°C, preferably at room temperature (i.e. between 15°C-25°C) which avoid the use of sophisticated drying devices. If a second layer is applied, the pipes can be put back into service within 2 days after the interruption of the water distribution system.

Advantageously, said internal surface of a pipe comprises metal and said coating eliminates and/or reduces the corrosion of metal. Advantageously, the material is a metal such as iron, copper, brass, lead, advantageously iron such as cast iron, preferably lamellar cast iron, or steel or ductile iron.

In an embodiment of the invention, said internal surface of a pipe comprises lead and said coating reduces lead leaching. Indeed, as shown below, the coating of pipes according to the invention helps to greatly reduce release of lead ions, or lead leaching, by pipes containing lead.

Alternatively, said internal surface of a pipe comprises polyvinyl chloride and said coating reduces the release of vinyl chloride monomers (VCM).

Advantageously, said internal surface of a pipe comprises concrete, asbestos cement, cement and/or mortar coating, and said coating reduces the degradation of said concrete, asbestos cement, cement and/or mortar coating and said coating reduces the degradation of cement and/or concrete.

## DRAWINGS

[Fig. 1] shows a typical structure of a sol-gel matrix suitable for the invention.

[Fig.2] is a graph showing the masse loss evolution according to TEEOS weight percent.

[Fig. 3] is a graph showing mass loss as a function of GPTMS weight percent in xerogels with a constant TEOOS concentration of 30%w.

[Fig.4] is a graph showing mass loss as a function of TEOOS weight percent in xerogels with a constant GPTMS

concentration of 10%w.

[Fig. 5] is a graph showing mass loss as a function of TEOS weight percent in xerogels with a constant TEOOS concentration of 40%w.

[Fig. 6] is a graph showing mass loss as a function of pH in xerogels with TEOOS concentrations of 30 and 40%w.

[Fig. 7] is a graph showing mass loss as a function of the particles added to the xerogel solution made of 40%w TEOOS and 10%w GPTMS.

[Fig. 8] is a graph showing the corrosion rate of coupons with and without xerogel coating.

[Fig.9] is a picture showing the corrosion in a pipe for water distribution network to which the sol-gel matrix of the invention could be applied.

## EXAMPLES

The invention will be described by way of examples related to the efficacy for limiting corrosion. However, the invention is not restricted to these examples.

More specifically, the following examples demonstrate the efficiency of the use of a coating comprising a sol-gel matrix, such as a xerogel, on the surface of material to protect said material from corrosion and improves the water quality.

### Example 1 - Formulation assay

Xerogels according to the invention have been prepared as follows. First, one or more silane precursor(s) according to formula (I) between the TEOS, TEOOS and GPTMS were mixed at a concentration varying between 10 and 70% with isopropanol. The solution was then stirred vigorously for at least 30 min. 5 mL of hydrochlorhydric acid at a concentration of 1 M or 0.1 M were then added dropwise while making sure that the solution did not heat too much because the reaction is exothermic. Metallic ($Zn_3(PO_4)_2$ and $TiO_2$) anticorrosion particles were then added if desired. The solution was stirred for at least 15 hours.

Corroded cast iron and/or steel coupons were dip coated three times in the xerogel solution (gel). Each dipping lasted 20 seconds and were separated by 5 min.

Finally, the coupons with the xerogel were left to dry at room temperature for at least 5 hours.

The coupons used were pre-corroded coupons with the same length, width and thickness. After that, the mass of the coated coupon was measured using an analytical balance with a precision of 0.1 mg.

Table 2 below shows the different xerogels according to the invention:

| | %w TEOOS | %w GPTMS | %w TEOS | pH | Particles | Gel stability |
|---|---|---|---|---|---|---|
| 1 | 10 | / | / | 1 | / | Yes |
| 2 | 30 | / | / | 1 | / | Yes |
| 3 | 40 | / | / | 1 | / | No |
| 4 | 50 | / | / | 1 | / | No |
| 5 | 60 | / | / | 1 | / | No |
| 6 | 70 | / | / | 1 | / | No |
| 7 | 30 | 20 | / | 1 | / | Yes |
| 8 | 30 | 10 | / | 1 | / | Yes |
| 9 | 40 | 10 | / | 1 | / | Yes |
| 10 | 10 | 10 | / | 1 | / | Yes |
| 11 | / | 10 | / | 1 | / | Yes |
| 12 | 40 | / | 10 | 1 | / | Yes |

(continued)

| | %w TEOOS | %w GPTMS | %w TEOS | pH | Particles | Gel stability |
|---|---|---|---|---|---|---|
| 13 | 30 | 10 | 10 | 1 | / | Yes |
| 14 | 30 | / | / | 3 | / | Yes |
| 15 | 40 | / | / | 3 | / | Yes |
| 16 | 40 | 10 | / | 1 | $TiO_2$ | Yes |
| 17 | 40 | 10 | / | 1 | $Zn_3(PO_4)_2$ | Yes |

After dip-coating, drying and mass measurement, coupons with and without xerogel were attached to a wire and left in synthetic water for 2 weeks. Synthetic water is specifically formulated to mimic "aggressive" waters, i.e. waters that display a high corrosiveness for cast iron and steel. Water having a high corrosiveness has, for instance, a Langelier index of about -1.5 and a Larson index of about 2.5.

To be specific, Langelier Index is an approximate indicator of the degree of saturation of calcium carbonate in water. It is calculated by using the pH, alkalinity, calcium concentration, total dissolved solids, and water temperature of a water sample collected at the tap. If the:

- Langelier Index is negative: the water is under saturated with calcium carbonate and will tend to be agressive in the distribution system;
- Langelier Index is positive: the water is over saturated with calcium carbonate and will tend to deposit calcium carbonate forming scales in the distribution system; and
- Langelier Index is close to zero: the water is just saturated with calcium carbonate and will neither be strongly agressive nor scale forming.
  The formula of calculation of the Langelier index can be found at the following address: https://www.mae.gov.nl.ca/waterres/quality/drinkingwater/pdf/calculation_langelie r_index.pdf
  The Larson Ratio (LR) describes the corrosivity of water towards mild steel and can be calculated as follows:

$$\text{Larson index} = [(\text{sulfate concentration x2}) + (\text{chloride concentration})] / \text{alcalinity}$$

Sulfate and chloride concentrations being both expressed in mol/L.
If the Larson index is above 0.5, the solution has a metal corrosion tendency.

Table 3 below shows the composition of the synthetic water used for the tests:

| | | Concentration (mg/L) |
|---|---|---|
| Calcium | $Ca^{2+}$ | 33 |
| Magnesium | $Mg^{2+}$ | 12.1 |
| Sodium | $Na^+$ | 2.0 |
| Potassium | $K^+$ | 2.0 |
| Chloride | $Cl^-$ | 53.4 |
| Sulfate | $SO_4^{2-}$ | 20.0 |
| Bicarbonate | $HCO_3^-$ | 52.9 |

After two weeks in stagnant synthetic water, coupons were removed, rinsed with clear water, scratched with a sponge to remove any anchored corrosion, and left to dry at least 1 hour at room temperature. Their masses were then measured with an analytical balance, and subtracted to preliminary masses measured after coating and drying.

The resulting mass is the sum of the mass loss due to corrosion and the mass loss due to the degradation of the xerogel coating in the synthetic water. This sum is also very important because degradation of the xerogel over time

should be as low as possible.

Fig. 2 shows the evolution of mass loss as a function of the TEOOS weight percent (%w) in the xerogel solutions 1 to 6. The value given at 0%w (78 mg) corresponds to the mass loss obtained for the reference without xerogel. It is important to note again that xerogels with 40%w, 50%w, 60%w and 70%w TEOOS were not stable in solution because they formed two phases. Therefore, the corresponding mass losses are provided for information only.

As a general trend, mass loss decreases with increasing TEOOS weight percent. However, a minimum corresponding to a mass loss of 14 mg, which is far below the other points, has been obtained with a 40%w TEOOS coating. This minimum corresponds to the coupon where no corrosion was observed after 14 days.

Fig. 3 shows the evolution of coupon mass loss as a function of GPTMS weight percent (%w) in xerogels No. 2, No. 7 and No. 8 in Table 3. In all three of these xerogels, the TEOOS concentration was kept constant equal to 30%w. A decrease in mass loss with increasing GPTMS concentration, up to a minimum of 27 mg for a concentration of 20%w GPTMS can be observed. These results can be correlated to the previous results obtained with TEOOS to compare the effects of TEOOS and GPTMS on the xerogel anticorrosion properties. Indeed, if the slope of the curve is estimated between 0 and 20%w GPTMS in figure 3 and between 0 and 40%w in TEOOS in figure 2, a mass loss of -1.8 mg/GPTMS %w and -1.6 mg/TEOOS %w can be obtained. This suggests that the effects of increasing the concentration of TEOOS and GPTMS on the xerogel anticorrosion properties are similar, but slightly higher with GPTMS.

In Fig. 4, the concentration of GPTMS has been kept constant equal to 10%w and the concentration of TEOOS in the xerogel has been varied from 0 to 40%w (xerogels No. 8 to No. 11 in Table 2). The graph of mass loss is represented as a function of the TEOOS weight percent. A decrease in mass loss with TEOOS concentration, up to a minimum of 21 mg with 40%w TEOOS with a slope of -1.4 mg/TEOOS %w can be observed. This confirms previous conclusions that corrosion decreases with TEOOS concentration with a similar slope with and without GPTMS. Additionally, it should be noted that, for the same concentration of silane precursors (sum of %w GPTMS and %w TEOOS) equal to 50%w, a 26-mg loss with 30/20%w TEOOS/GPTMS, and a 21-mg loss with 40/10%w TEOOS/GPTMS have been obtained. Therefore, TEOOS and GPTMS seem to have about the same efficiency. However, if the mass loss obtained with 40%w TEOOS only (Fig. 2) with the mass loss obtained with 40%w TEOOS and 10%w GPTMS (Fig. 4) are compared, the result is 7 mg lower without GPTMS. Therefore, the main role of GPTMS is to stabilize the xerogel containing 40%w TEOOS in solution.

TEOS anticorrosion effect has been tested with xerogel No. 12 made of 40%w TEOOS and 10%w TEOS and compared to xerogel No.3 made of 40%w TEOOS only (Table 2). The graph of mass loss as a function of TEOS concentration is shown in Fig. 5.

As shown by Fig. 5, the mass loss increases by about 10 mg with a 10%w increase in TEOS concentration. Thus, TEOS and GPTMS both stabilize the 40%w TEOOS xerogel solution. However, they cause a slight (10 and 7 mg, respectively) increase in mass loss corresponding to a lower efficiency at preventing corrosion.

In addition, xerogel No. 13 of Table 2 which contains 30%w of TEOOS, 10%w GPTMS and 10%w TEOS has also been tested and provided coupon mass loss of 57 mg. This mass loss is 6 mg lower than the one obtained with xerogel No. 2 (comprising 30%w TEOOS), but is 21 mg higher than the mass loss obtained with 30%w TEOOS and 10%w GPTMS.

Furthermore, the mass loss obtained with all three precursors is 43 mg higher than the results obtained with 40%w TEOOS, which suggests that TEOOS is more effective than GPTMS and TEOS at preventing corrosion.

The effect of pH on the xerogel anticorrosion properties were tested based on two TEOOS weight percent, $30\%_w$ and $40\%_w$. For each TEOOS concentration, a pH of 1 and 3 has been evaluated, corresponding to xerogels No. 2, No. 3, No. 14 and No. 15 in Table 2. The resulting mass losses are represented in Fig. 6.

As shown by Fig. 6, increasing the pH from 1 to 3 not only stabilizes the xerogel in solution, especially for the 40%w TEOOS concentration, but also decreases the resulting mass loss. Indeed, a decrease of around 50 and 10 mg are obtained with TEOOS concentrations of 30 and 40%w, respectively. Therefore, the use of pH 3 instead of pH 1 seems to be optimum for anticorrosion.

To finish, the additions of either 0.5%w $TiO_2$ (composition 16) or 0.5%w $Zn_3(PO_4)_2$ (xerogel No. 17) particles in xerogel No. 9 in Table 2 (composed of 40%w TEOOS and $10\%_w$ GPTMS) were tested. The mass loss results are shown in Fig. 7.

As shown by Fig. 7, the addition of $TiO_2$ induces an increase in mass loss of 7 mg. As such, $TiO_2$ does not affect, or even reduces, the xerogel anticorrosion effects. On the other hand, the addition of $Zn_3(PO_4)_2$ induces a significant mass loss decrease of 20 mg. Therefore, the lowest mass loss of 1 mg was found with xerogel No. 17, as compared to all the other compositions in Table 2.

In conclusion, xerogels No. 9 (40%w TEOOS, 10%w GPTMS, pH 1), No. 12 (40%w TEOOS, 10%w TEOS, pH 1), No. 15 (40%w TEOOS, pH 3), No. 16 (40%w TEOOS, 10%w GPTMS, pH 1, $TiO_2$) and No. 17 (40%w TEOOS, 10%w GPTMS, pH 1, $Zn_3(PO_4)_2$), with corresponding mass losses of 21 mg, 23 mg, 5 mg, 28 mg and 1 mg, respectively, give the best stability and anticorrosion efficiency.

**Example 2 - Anticorrosion performances of xerogels according to the invention**

Five xerogels were prepared according to the method described in Example 1 and with the corresponding compositions in Table 2:

- Xerogel No. 9 (40%w TEOOS and 10%w GPTMS at pH 1)
- Xerogel No. 12 (40%w TEOOS and 10%w TEOS at pH 1)
- Xerogel No. 15 (40%w TEOOS at pH 3)
- Xerogel No. 16 (40% TEOOS, 10% GPTMS and 0.5%w $TiO_2$ at pH 1)
- Xerogel No. 17 (40% TEOOS, 10% GPTMS and 0.5%w $Zn_3(PO_4)_2$ at pH 1)

New steel coupons were obtained from Cosasco. Their mass was measured precisely in an analytical balance. Then, they were dipped one time for 20 seconds in the xerogel solutions above. The resulting coupons are:

- Coupon 1: Reference steel coupon after dipping in isopropanol
- Coupon 2: Steel coupon after dipping in a xerogel used as a reference
- Coupon 3: Steel coupon after dipping in xerogel No. 15
- Coupon 4: Steel coupon after dipping in xerogel No. 9
- Coupon 5: Steel coupon after dipping in xerogel No. 12
- Coupon 6: Steel coupon after dipping in xerogel No. 16
- Coupon 7: Steel coupon after dipping in xerogel No. 17

After letting them dry overnight (for about 15 hours) at room temperature, the coupons were observed and placed in corrosion pilots to measure their corrosion rates. Coupons 1 (reference) and 5 (TEOOS+TEOS) already seem to be corroded from the contact with air.

Corrosion pilots are used to evaluate the degradation of metallic coupons by measuring their mass loss after a specific time. Synthetic water (Table 3) in the corrosion pilots circulates through the pilot with a flow rate of 12 L/min. The coupons were left in the pilots for 45 days, during which the aspects of the coupons, the water pH and the turbidity were followed. After the test, the coupons were removed from the pilots. The mass loss obtained allows to calculate the corrosion rate in $\mu$m/year.

The seven coupons were observed in the pilots throughout the 45-day corrosion test. When comparing coupon 1 without xerogel with coupons 2 to 7 with xerogel, it appears that xerogel coating has a significant anticorrosion effect. Indeed, after 7 days, coupon 1 is already covered with corrosion on the contrary of the other coupons for which corrosion is barely visible.

After 30 days, corrosion can be observed on some coupons with xerogel. Coupons 2 and 7 seem to have some pitting corrosion, coupons 4 and 5 have a very thin layer of corrosion covering their surfaces, and coupon 6 shows corrosion at the tip of the coupon. Coupon 3 does not show any corrosion, even after 45 days.

After 45 days, all the coupons were removed from the pilots. According to the visual observations, there is a lot less corrosion on coupons 2-7 with xerogel than on coupon 1 without xerogel. Coupon 2 shows some pitting corrosion with black corrosion particles on the surface. Coupon 3 shows corrosion coming from its side that might be non-properly coated. Coupon 4 shows a very thin film of iron oxide that can be easily wiped off. Coupon 4 is like coupon 3 but with a little bit more corrosion. Coupon 6 shows more corrosion than all the other coupons and the corrosion seems to start from the tip of the coupon. Finally, coupon 7 has few pitting corrosions.

Therefore, after 45 days, the xerogel anticorrosion effect is evident just by observing the coupons. In addition, coupon 6 appeared to be the most corroded of all the coupons.

**Example 3 - Calculation of the corrosion rate**

The mass loss obtained with coupon No.6 coated with xerogel and coupon No.1 were compared. Table 4 below shows the mass losses obtained after leaving steel coupons for 45 days in the corrosion pilots, as described above. The mass losses were then used, along with the steel density, residence time and dimensions to calculate the corresponding corrosion rates in μm/year.

| Coupons | Mass loss (mg) | Corrosion rate (μm/year) |
|---|---|---|
| Without xerogel | 1 156 | 652 |
| With xerogel | 27 | 15 |

As it can be seen from the results in Table 4 and the corresponding Fig. 8, the corrosion rate with xerogel is around 40 times lower than without xerogel. Therefore, while a coupon without xerogel reaches a mass loss of 1156 mg after 45 days, it will take, in theory, around 5 years for a coupon with xerogel to reach the same amount of corrosion.

In addition, the mass loss obtained on the coupon with xerogel after 45 days in the pilots, 27 mg (Table 4), is about the same as the mass loss obtained after 2 weeks in stagnant water on precorroded cast iron coupons, 28 mg (Fig. 7). This decrease in corrosion rate (same mass loss for 14 days vs. 45 days) can be explained by the fact that stagnant water is more corrosive, and that precorroded coupons corrode faster than new coupons.

In spite of providing the lowest results in terms of anticorrosion effect when compared to the other formulations according to the invention, it has been demonstrated that xerogel No. 16 still provided a 40-fold decrease of corrosion as well as a 5-year lifetime extension of the corroded material.

Therefore, the results of the examples disclosed above show that the use of all xerogels reduces the corrosion of metal pipes and more specifically, cast iron and steel pipes. All xerogel compositions show excellent results in protecting corroded metal pipes from corrosion, hence increasing their lifetime and the quality of water.

In other words, it has been demonstrated that the use of a coating comprising a sol-gel matrix according to the invention reduces the corrosion rates of existing metallic pipes, hence increasing their lifetime and the water quality, regardless of the age of the pipe.

Although the tests have been carried out with xerogels on cast iron and steel bars, the conclusions about the effectiveness of the invention can be extrapolated to any type of material and sol-gel matrix.

## Claims

**1.** Pipe element of an existing water distribution network having:

a. a pipe body extending along a central axis, the pipe body having an internal surface and an external surface; and
b. a coating applied onto said internal surface, said coating comprising a sol-gel matrix obtained by a sol-gel processed composition.

**2.** Pipe element according to claim 1 wherein said sol-gel matrix is a xerogel.

**3.** Pipe element according to claim 1 or 2 wherein said sol-gel processed composition comprises at least one compound of formula (I) below:

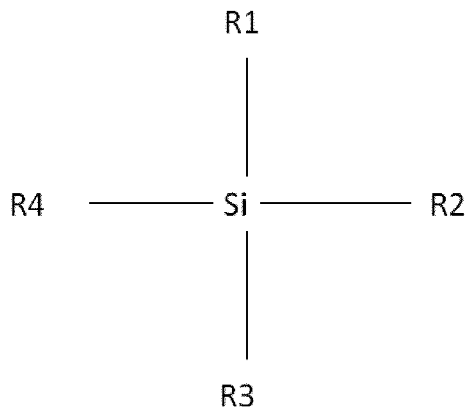

(I)

wherein

$R^1$, $R^2$, $R^3$ are independently of each other a linear or ramified $C_1$-$C_{12}$ alkyl group, a linear or ramified $C_1$-$C_{12}$ alkoxy group, or a linear or ramified O-C(O)-($C_1$-$C_{12}$ alkyl) group, provided that at least 2 of $R^1$, $R^2$, $R^3$ are a linear or ramified $C_1$-$C_{12}$ alkoxy group or a linear or ramified O-C(O)-($C_1$-$C_{12}$ alkyl) group;
$R^4$ is:

- a linear or ramified $C_1$-$C_{12}$ alkyl group, optionally substituted by 1 to 3 substituents selected from the group consisting of: F, SH, $NR_aR_b$, $OR_a$, COOH, $COOR_c$, $CHOCH_2$,
with $R_a$ and $R_b$ being independent from each other H, or a linear or ramified $C_1$-$C_6$ alkyl group wherein one carbon atom may be replaced by O, S or NH, and $R_c$ being a linear or ramified $C_1$-$C_6$ alkyl group or a linear or ramified $C_1$-$C_4$ alkenyl group;
- a linear or ramified $C_1$-$C_4$ alkenyl group, preferably a vinyl group;
- a linear or ramified $C_1$-$C_{12}$ alkoxy group, optionally substituted by 1 to 3 substituents selected from the group consisting of: F, SH, $NR_aR_b$, $OR_a$, COOH, $COOR_c$;
- a linear or ramified O-C(O)-($C_1$-$C_{12}$ alkyl) group; or
- the compound of formula (I) is symmetrical, and $R^4$ is a $C_2$-$C_4$ alkylene group, wherein 1 or 2 carbon atoms may be replaced by an oxygen or sulphur atom.

**4.** Pipe element according to claim 3 wherein the compound of formula (I) is symmetrical, and $R^4$ is a $C_2$-$C_4$ alkylene group, wherein 1 or 2 carbon atoms may be replaced by a sulphur atom.

**5.** Pipe element according to claim 3 wherein $R^4$ is a linear or ramified $C_1$-$C_{12}$ alkoxy group, optionally substituted by 1 to 3 substituents selected from the group consisting of: F, SH, $NR_aR_b$, $OR_a$, COOH, $COOR_c$, with $R_a$ and $R_b$ being independent from each other H, or a linear or ramified $C_1$-$C_6$ alkyl group wherein one carbon atom may be replaced by O, S or NH, and $R_c$ being a linear or ramified $C_1$-$C_6$ alkyl group or a linear or ramified $C_1$-$C_4$ alkenyl group.

**6.** Pipe element according to claim 3 wherein $R^4$ is a linear or ramified O-C(O)-($C_1$-$C_{12}$ alkyl) group, preferably a linear or ramified O-C(O)-($C_1$-$C_6$ alkyl) group, even more preferably a linear or ramified O-C(O)-($C_1$-$C_4$ alkyl) group, such as an acetoxy group.

**7.** Pipe element according to claim 3 wherein $R^4$ is a linear or ramified $C_1$-$C_{12}$ alkyl group, optionally substituted by 1 to 3 substituents selected from the group consisting of: F, SH, $NR_aR_b$, $OR_a$, COOH, $COOR_c$, with $R_a$ and $R_b$ being independent from each other H, or a linear or ramified $C_1$-$C_6$ alkyl group wherein one carbon atom may be replaced by O, S or NH, and $R_c$ being a linear or ramified $C_1$-$C_6$ alkyl group or a linear or ramified $C_1$-$C_4$ alkenyl group.

**8.** Pipe element according to any of claims 3 to 7 wherein compounds of formula (I) are tetraethoxysilane (TEOS), triethoxyoctylsilane (TEOOS), 3-glycidoxypropyltrimethoxysilane (GPTMS), 3-methacryloxy-propyl-trimethoxysilane (MAPTS), 3-aminopropyltriethoxysilane (APTES), tetramethoxysilane (TMOS), tetraacetoxysilane (TAOS), triethoxydodecylsilane (TEODS), methyltriethoxysilane (MTES), methyltrimethoxysilane (MTMS), butyltriethoxysilane (BTES), isobutyltrimethoxysilane (IBTMS), 3-(2-aminoethyl)aminopropyltrimethoxysilane (DAMO), 3-acryloyloxypropyltrimethoxysilane (AOPTMS), 3-mercapto-propyl-trimethoxysilane (MPTMS), and bis-[3-(triethoxysilyl)propyl] polysulfide (TESPTS), preferably TEOS, TEOOS, GPTMS, MAPTS and APTES.

**9.** The sol-gel processed composition of the invention may comprise a mixture of 2 or more, preferably 2 or 3, compounds of formula (I).

**10.** Pipe element according to any of the preceding claims wherein sol-gel processed composition of the invention may comprise additives, preferably $TiO_2$ and $Zn_3(PO_4)_2$.

**11.** A method for coating a pipe element from an existing water distribution network, said pipe element having a pipe body extending along a central axis, the pipe body having an internal surface and an external surface, the method comprising a step of applying onto said internal surface a coating comprising a sol-gel matrix obtained by a sol-gel processed composition.

**12.** A method for preventing corrosion and/or for reducing metal ion leaching from a pipe element of an existing water distribution network, said pipe element comprising a pipe body extending along a central axis, the pipe body having an internal surface and an external surface, said internal surface comprising a metal surface, said method comprising a step of applying onto said internal surface a coating comprising a sol-gel matrix obtained by a sol-gel processed composition.

**13.** A method for preventing or reducing release of vinyl chloride monomers (VCM) from a pipe of an existing water distribution network,
said pipe comprising an existing pipe body extending along a central axis, the pipe body having an internal surface and an external surface, said internal surface comprising polyvinyl chloride,
said method comprising a step of applying onto said internal surface a coating comprising a sol-gel matrix obtained by a sol-gel processed composition.

**14.** A method for preventing or reducing the degradation from a pipe element of an existing water distribution network, said pipe element having a pipe body extending along a central axis, the pipe body having an internal surface and an external surface, said internal surface comprising concrete, asbestos cement, cement and/or mortar coating,
said method comprising a step of applying onto said internal surface a coating comprising a sol-gel matrix obtained by a sol-gel processed composition.

**15.** The method of any of the claims 11 to 14 wherein said sol-gel processed composition is as according to any of claims 1-10.

[Fig. 1]

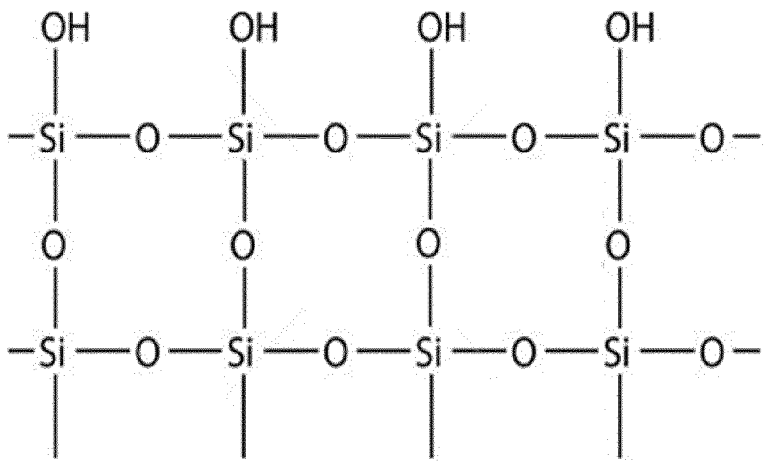

[Fig.2]

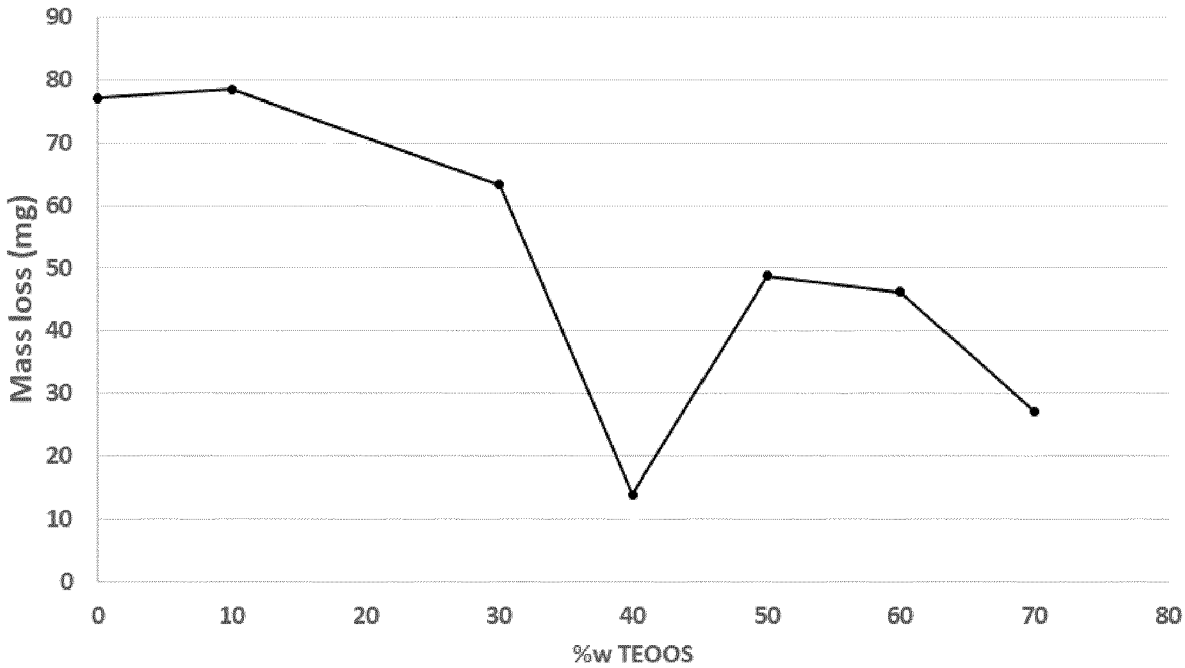
Mass loss (mg)
0
10
20
30
40
50
60
70
80
90
0
10
20
30
40
50
60
70
80
%w TEOOS

[Fig. 3]

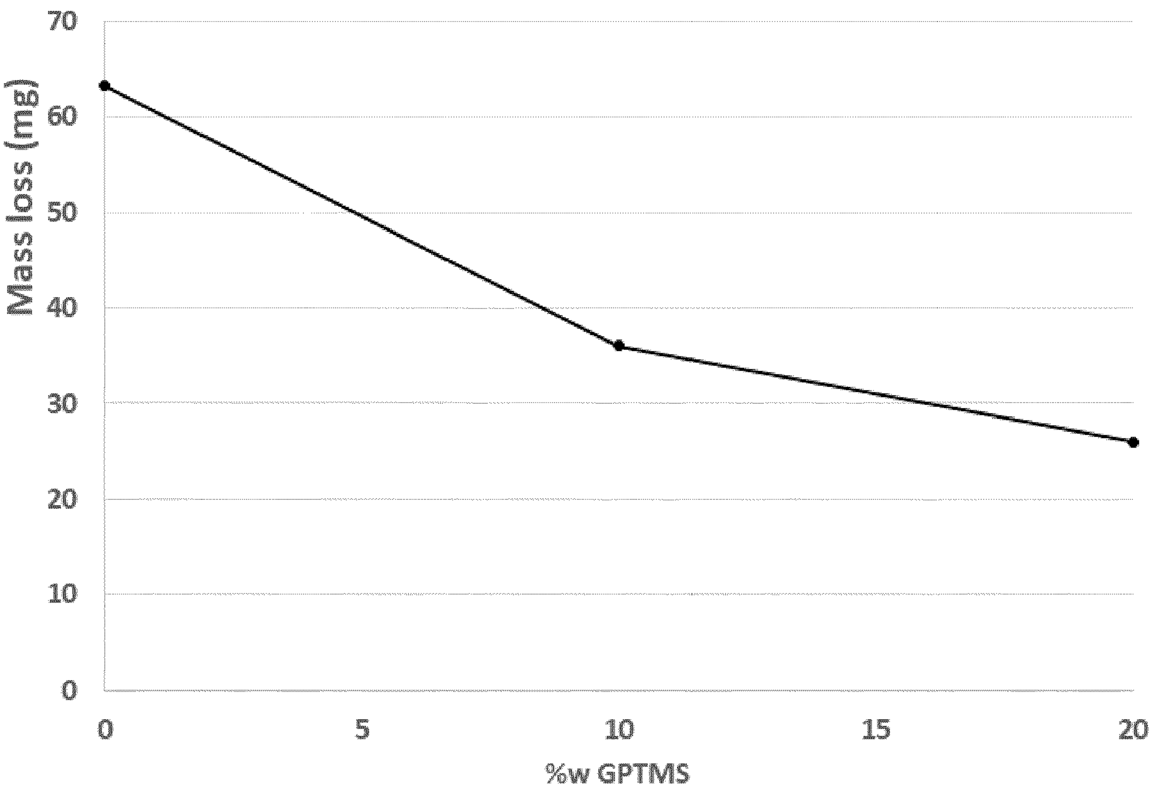
Mass loss (mg)
0
10
20
30
40
50
60
70
0
5
10
15
20
%w GPTMS

[Fig.4]

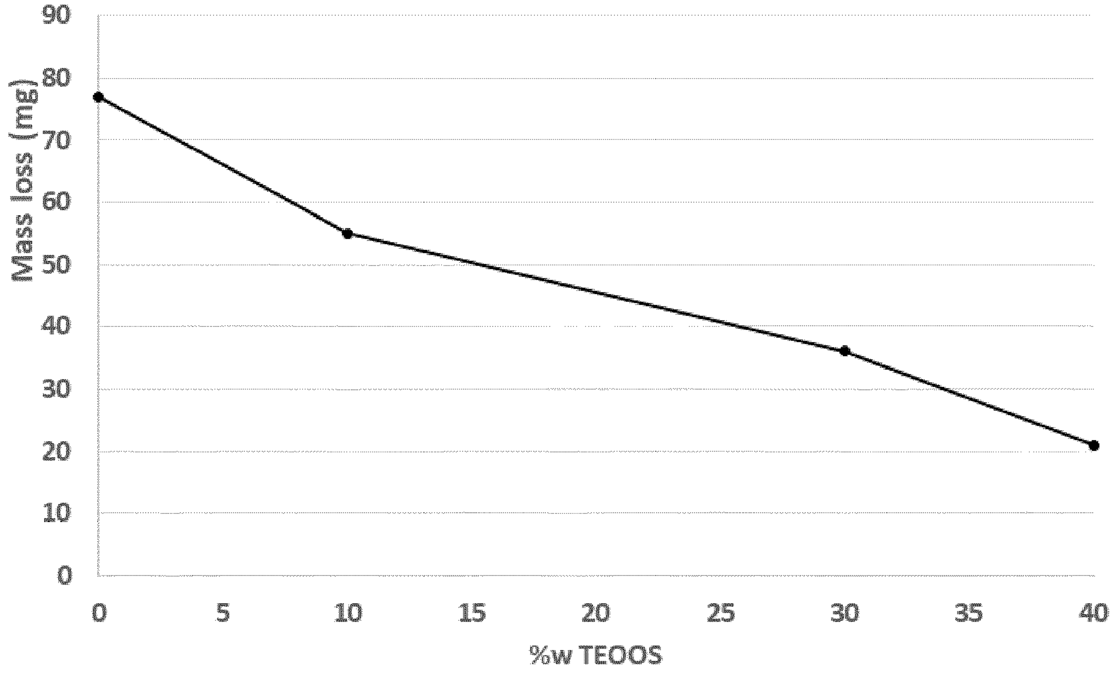
Mass loss (mg)
90
80
70
60
50
40
30
20
10
0
0
5
10
15
20
25
30
35
40
%w TEOOS

[Fig.5]

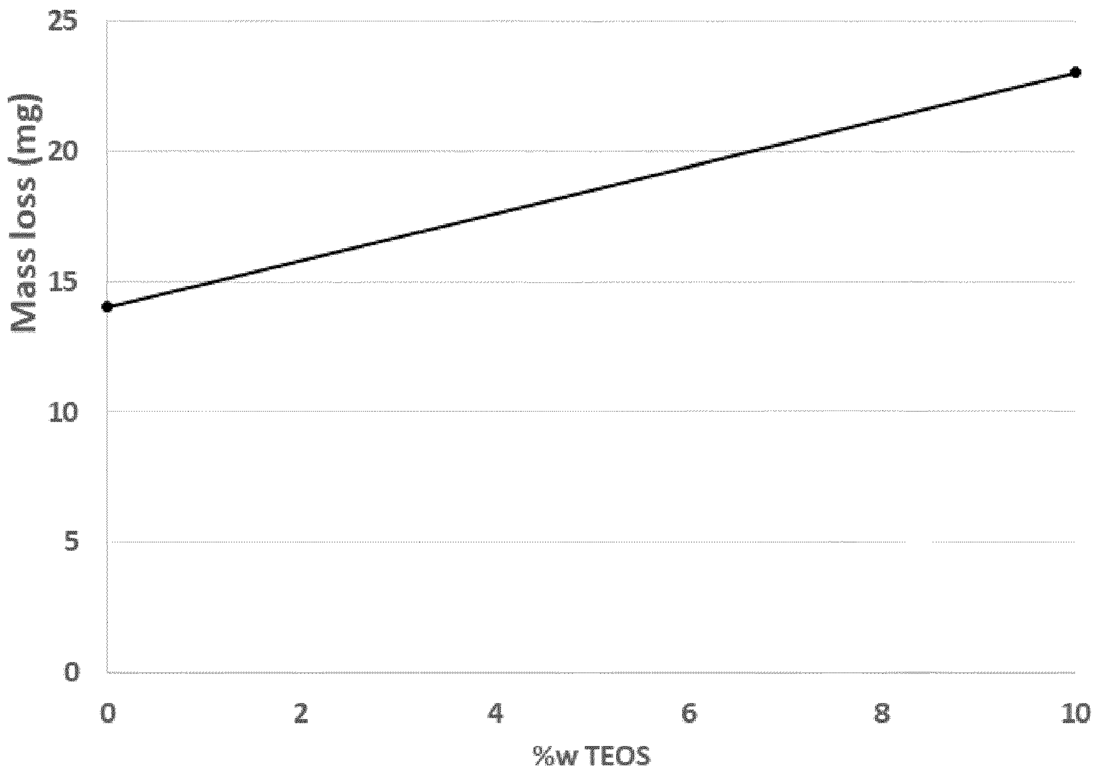
Mass loss (mg)
25
20
15
10
5
0
0
2
4
6
8
10
%w TEOS

[Fig.6]

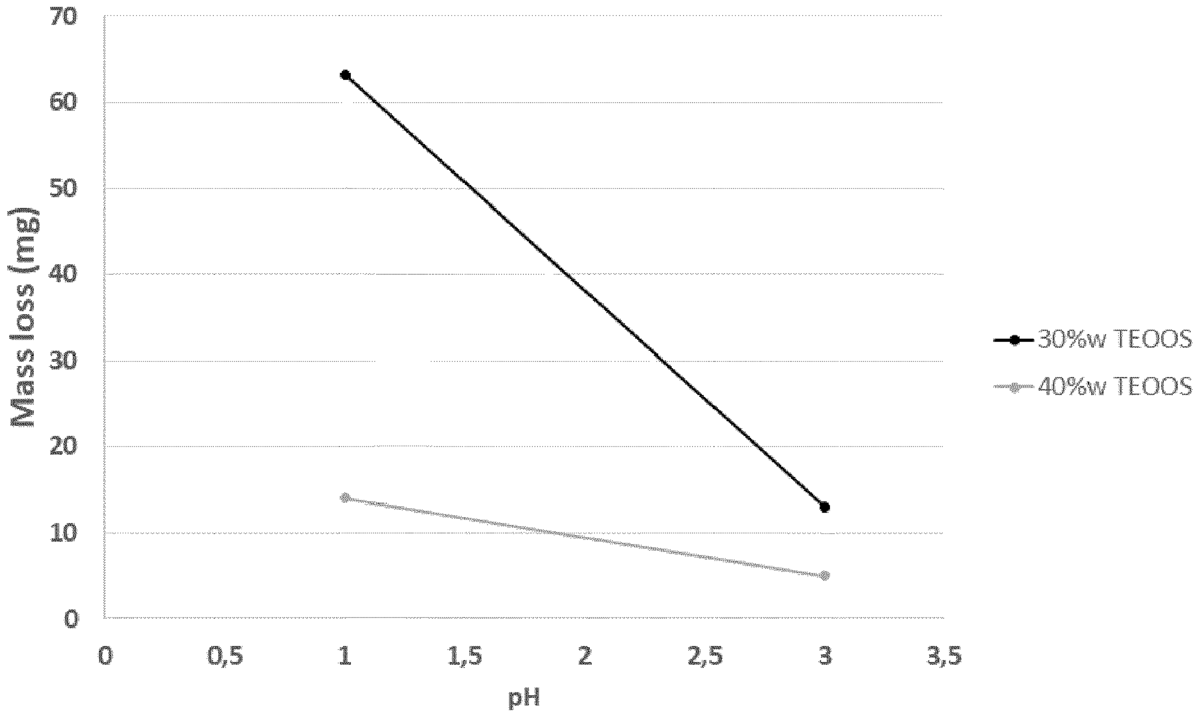
70
60
50
40
30
20
10
0
Mass loss (mg)
0
0,5
1
1,5
2
2,5
3
3,5
pH
30%w TEOOS
40%w TEOOS

[Fig.7]

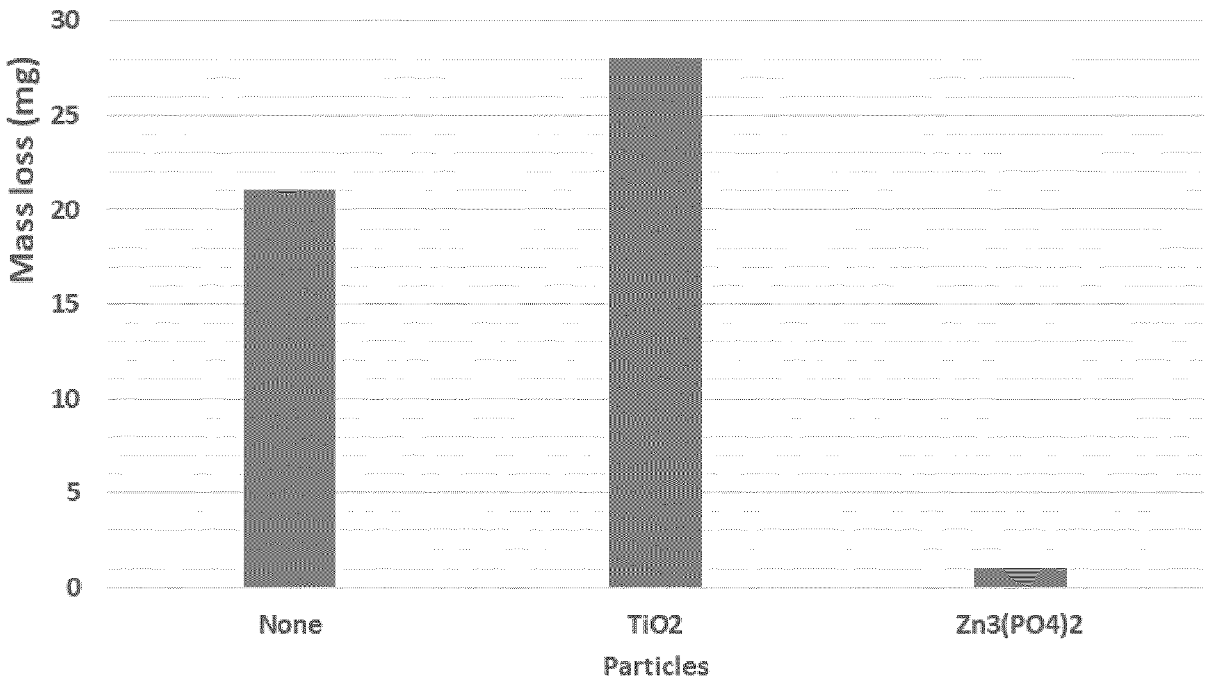
30
25
20
15
10
5
0
Mass loss (mg)
None
TiO2
Zn3(PO4)2
Particles

[Fig.8]

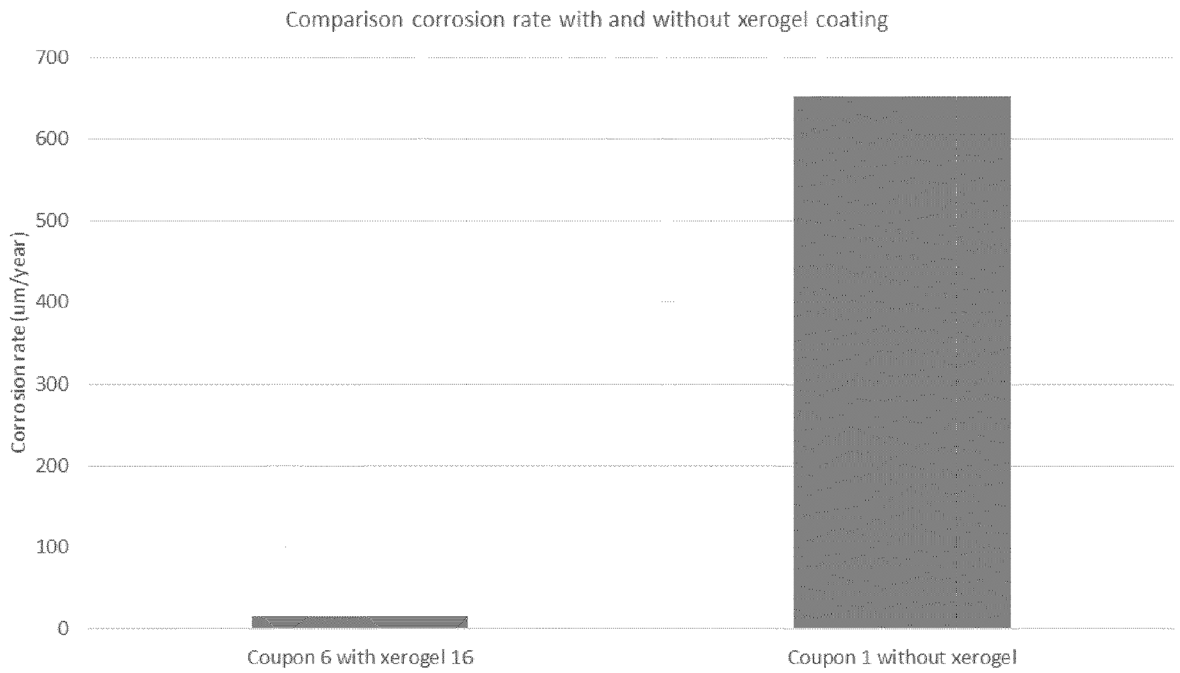
Comparison corrosion rate with and without xerogel coating
700
600
500
400
300
200
100
0
Corrosion rate (um/year)
Coupon 6 with xerogel 16
Coupon 1 without xerogel

[Fig.9]

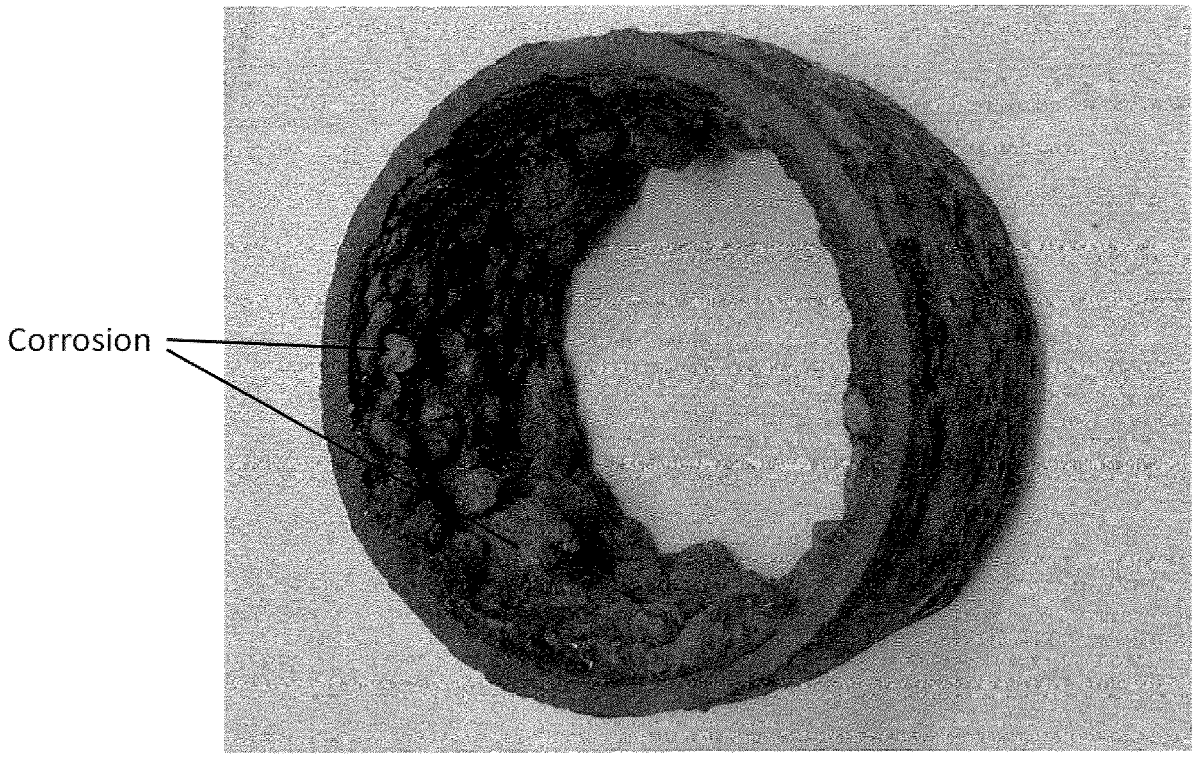
Corrosion

Europäisches Patentamt
European Patent Office
Office européen des brevets

# EUROPEAN SEARCH REPORT

Application Number
EP 20 15 0326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | DE 199 35 230 A1 (FEINCHEMIE GMBH SEBNITZ [DE]) 8 February 2001 (2001-02-08)<br>* paragraph [0010] - paragraph [0012] *<br>* examples 1-3 *<br>----- | 1-10<br>11-15 | INV.<br>C09D4/00<br>C09D183/04<br>C09D183/06<br>C09D183/08<br>C08G77/24<br>F16L55/162<br>F16L58/10 |
| | | | TECHNICAL FIELDS SEARCHED (IPC) |
| | | | C09D<br>C08G<br>F16L |

The present search report has been drawn up for all claims

1

| Place of search | Date of completion of the search | Examiner |
|---|---|---|
| The Hague | 30 June 2020 | Stinchcombe, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 15 0326

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2020

| Patent document cited in search report | Publication date | Patent family member(s) | Publication date |
|---|---|---|---|
| DE 19935230 A1 | 08-02-2001 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102008025795
- US 6019254 A
- WO 2005045144 A
- EP 2019051474 W
- WO 2018228887 A
- WO 2011121252 A
- US 20120312192 A
- WO 2017100629 A